(19) Europäisches Patentamt
European Patent Office
Office européen des brevets

(11) EP 2 626 391 B1

(12) **EUROPEAN PATENT SPECIFICATION**

(45) Date of publication and mention of the grant of the patent:
**12.07.2017 Bulletin 2017/28**

(51) Int Cl.:
***C09D 11/00*** *(2014.01)*

(21) Application number: **13153892.8**

(22) Date of filing: **04.02.2013**

(54) **Ink composition for inkjet recording, inkjet recording method, and printed material**

Tintenzusammensetzung zur Tintenstrahlaufzeichnung, Tintenstrahlaufzeichnungsverfahren und gedrucktes Material

Composition d’encre pour enregistrement à jet d’encre, procédé d’enregistrement à jet d’encre et matériau imprimé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2012 JP 2012026665**

(43) Date of publication of application:
**14.08.2013 Bulletin 2013/33**

(73) Proprietor: **Fujifilm Corporation**
**Minato-ku**
**Tokyo (JP)**

(72) Inventor: **Hayata, Yuuichi**
**Ashigarakami-gun, Kanagawa (JP)**

(74) Representative: **Klunker IP**
**Patentanwälte PartG mbB**
**Destouchesstraße 68**
**80796 München (DE)**

(56) References cited:
**EP-A1- 2 042 568 EP-A1- 2 088 176**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 626 391 B1

## Description

The present invention relates to an ink composition for inkjet recording, an inkjet recording method and a printed material.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low particularly in the case of small lot production. Furthermore, there is little noise and it is excellent as an image recording system, and has thus been attracting attention in recent years.

In particular, an inkjet ink composition that is curable upon exposure to radiation such as UV rays (radiation-curing inkjet recording ink composition) is an excellent system from the viewpoint of it being printed on various types of recording media because of the drying properties being excellent compared with a solvent-based ink composition since the majority of the components of the ink composition cure upon exposure to radiation such as UV rays, and because of the image being resistant to spreading.

As inkjet ink compositions, those described in JP-A-2003-147233 (JP-A denotes a Japanese unexamined patent application publication) and JP-A-2009-263603 can be cited.

It is an object of the present invention to provide an ink composition for inkjet recording having excellent discharge stability and giving an image having blocking resistance, surface scarring resistance, and suppressed image graininess, and an inkjet recording method and a printed material employing the ink composition for inkjet.

The object of the present invention has been attained by means described in <1> and <15> to <17> below. They are described below together with <2> to <14>, which are preferred embodiments.

<1> An ink composition for inkjet recording comprising (Component A) a radically polymerizable compound, (Component B) a polymerization initiator, (Component C) a colorant, and (Component D) a silicone-based surfactant with an HLB of at least 2 but no greater than 7, Component A comprising (Component A-1) an *N*-vinyllactam, Component D having a content of at least 0.4 mass% but no greater than 4.0 mass% of the entire ink composition, the total amount of monofunctional monomer being at least 75 mass% of the entire ink composition, the composition comprising no polyfunctional monomer or having a total amount of polyfunctional monomer of no greater than 10 mass% of the entire ink composition, and the composition having a surface tension at 25°C of at least 20.0 mN/m but no greater than 22.5 mN/m,

<2> the ink composition for inkjet recording according to <1>, wherein it further comprises (Component E) an inactive methyl methacrylate homopolymer and/or copolymer having a weight-average molecular weight of 4,000 to 120,000,

<3> the ink composition for inkjet recording according to <2>, wherein Component E has a content of at least 0.3 mass% but no greater than 2.0 mass% of the entire ink composition,

<4> the ink composition for inkjet recording according to <2> or <3>, wherein the weight-average molecular weight of Component E is 10,000 to 75,000,

<5> the ink composition for inkjet recording according to any one of <2> to <4>, wherein Component E is a methyl methacrylate homopolymer and/or a copolymer in which the proportion of methyl methacrylate-derived repeating unit is 30.0 to 85.0 mass%,

<6> the ink composition for inkjet recording according to any one of <2> to <5>, wherein Component E is a methyl methacrylate homopolymer and/or a methyl methacrylate-*n*-butyl methacrylate copolymer,

<7> the ink composition for inkjet recording according to any one of <2> to <6>, wherein the ratio by mass of Component E and Component D in the ink composition is 1:8 to 8:1,

<8> the ink composition for inkjet recording according to any one of <1> to <7>, wherein it comprises as Component D a silicone-based surfactant with an HLB of at least 2 but no greater than 5,

<9> the ink composition for inkjet recording according to any one of <1> to <8>, wherein the content of Component D is at least 0.5 mass% but no greater than 2.0 mass% of the entire ink composition,

<10> the ink composition for inkjet recording according to any one of <1> to <9>, wherein it further comprises as Component A (Component A-2) a compound represented by Formula (1) below,

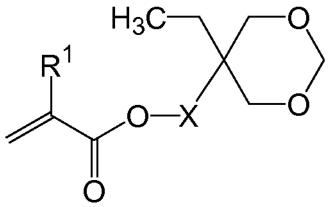

(1)

(In Formula (1), $R^1$ denotes a hydrogen atom or a methyl group, and X denotes a single bond or a divalent linking group.)

<11> the ink composition for inkjet recording according to any one of <1> to <10>, wherein it further comprises as Component A (Component A-3) a compound represented by Formula (2) below,

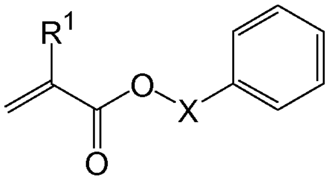

(2)

(In Formula (2), $R^1$ denotes a hydrogen atom or a methyl group, and X denotes a single bond or a divalent linking group.)

<12> the ink composition for inkjet recording according to any one of <1> to <11>, wherein Component A-1 is *N*-vinylcaprolactam,

<13> the ink composition for inkjet recording according to any one of <1> to <12>, wherein it has a surface tension of at least 20.5 mN/m but no greater than 22.0 mN/m,

<14> the ink composition for inkjet recording according to any one of <1> to <13>, wherein the content of the polyfunctional monomer is 0.5 to 8 mass% of the entire ink composition,

<15> an inkjet recording method comprising ($a^1$) a step of discharging onto a recording medium the ink composition for inkjet recording according to any one of <1> to <14> and ($b^1$) a step of curing the ink composition for inkjet recording by irradiating the discharged ink composition for inkjet recording with actinic radiation,

<16> a printed material obtained by the inkjet recording method according to <15>, and

<17> use of the composition according to any one of <1> to <14> as an ink for inkjet recording.

In accordance with the present invention, there can be provided an ink composition for inkjet recording having excellent discharge stability and giving an image having blocking resistance, surface scarring resistance, and suppressed image graininess, and an inkjet recording method and a printed material employing the inkjet ink composition.

(Ink composition for inkjet recording)

The ink composition for inkjet recording of the present invention (hereinafter, also simply called an 'ink composition') comprises (Component A) a radically polymerizable compound, (Component B) a polymerization initiator, (Component C) a colorant, and (Component D) a silicone-based surfactant with an HLB of at least 2 but no greater than 7, Component A comprising (Component A-1) an *N*-vinyllactam, Component D having a content of at least 0.4 mass% but no greater than 4.0 mass% of the entire ink composition, the total amount of monofunctional monomer being at least 75 mass% of the entire ink composition, the composition comprising no polyfunctional monomer or having a total amount of polyfunctional monomer of no greater than 10 mass% of the entire ink composition, and the composition having a surface tension at 25°C of at least 20.0 mN/m but no greater than 22.5 mN/m.

In the present specification, 'A to B', which expresses a numerical range, has the same meaning as 'at least A but no greater than B'. Furthermore, '(Component A) an *N*-vinyllactam' is also called simply 'Component A'.

In the present invention, when both or either of 'acrylate' and 'methacrylate' are referred to, it might be expressed as '(meth)acrylate'.

Furthermore, 'mass%' and 'parts by mass' have the same meanings as 'wt%' and 'parts by weight' respectively.

Moreover, in the present invention a combination of the preferred embodiments explained below is a more preferred embodiment.

The ink composition of the present invention is an oil-based ink composition that can cure upon exposure to

an actinic radiation (also called 'active energy line'). The 'actinic radiation' is a radiation that can provide energy that enables an initiating species to be generated in the ink composition when irradiated, and broadly includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are yet more preferable.

The ink composition of the present invention preferably does not comprise water.

Due to the ink composition of the present invention comprising the specific compounds at a specific ratio, an inkjet ink composition that has excellent continuous discharge stability and can give an image having excellent blocking resistance, surface scarring resistance, and substrate adhesion and having good image graininess can be obtained.

As a result of an intensive investigation by the present inventors, it has been found that, by adding a silicone-based surfactant with an HLB in a specific range to an ink composition having a high proportion of monofunctional monomer, the ability to decrease surface tension becomes high, and as a result of improved slipping properties of a cured film, the blocking resistance and the surface scarring resistance improve. It is surmised that, although Component D is a surfactant having high hydrophobicity and a high surfactant effect, by increasing the monofunctional monomer content of the ink composition and reducing the polyfunctional monomer content, the crosslink density during crosslinking can be suppressed, and Component D is further localized on the cured film surface. It is thought that by promoting localization on the surface in this way, an image that is obtained has excellent blocking resistance and surface scarring resistance.

It is also surmised that reducing the surface tension by the addition of Component D enables an ink composition that has discharge stability and can give an image having suppressed graininess to be obtained.

Each of the components, the values of physical properties, etc. of the ink composition of the present invention are explained below.

(Component A) Polymerizable compound

The ink composition of the present invention comprises (Component A) a polymerizable compound, and as Component A it comprises (Component A-1) an N-vinyllactam. Component A is preferably a radically polymerizable compound.

(Component A-1) N-vinyllactam

The ink composition of the present invention comprises (Component A-1) an N-vinyllactam. Due to an *N*-vinyllactam being contained, the curability and the substrate adhesion are excellent.

Component A-1 is preferably a compound represented by Formula (a).

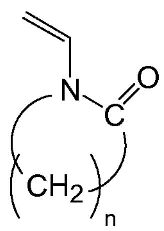

(a)

In Formula (a), n denotes an integer of 2 to 6; n is preferably an integer of 3 to 5 from the viewpoint of flexibility after the ink composition is cured, adhesion to a recording medium, and ready availability of starting materials, n is more preferably 3 or 5, and n is particularly preferably 5, which is N-vinylcaprolactam. N-vinylcaprolactam is preferable since it has excellent safety, is commonly used and is readily available at a relatively low price, and gives particularly good ink curability and adhesion of a cured film to a recording medium.

The N-vinyllactam may have a substituent such as an alkyl group or an aryl group on the lactam ring, and may have a saturated or unsaturated ring structure bonded to the lactam ring.

A compound represented by Formula (a) may be used singly or in a combination of two or more compounds.

The content of Component A-1 is, relative to the entire ink composition, preferably 5 to 30 mass%, more preferably 7.5 to 25 mass%, yet more preferably 10 to 20 mass%. When in the above-mentioned range, the curability of the interior of the printed material is strongly promoted, and excellent curability can be obtained, that is preferable.

In the present invention, it is preferable for the polymerizable compound (Component A) to comprise another polymerizable compound in addition to the *N*-vinyllactam (Component A-1), and it is preferable for it to comprise as said other polymerizable compound (Component A-2) a compound represented by Formula (1) above or (Component A-3)

a compound represented by Formula (2) above. Each thereof is explained below.

(Component A-2) Compound represented by Formula (1)

The ink composition of the present invention preferably comprises (Component A-2) a compound represented by Formula (1).

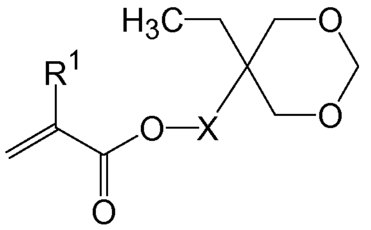

( 1 )

(In Formula (1), $R^1$ denotes a hydrogen atom or a methyl group, and X denotes a single bond or a divalent linking group.)

The compound represented by Formula (1) may be an acrylate compound or a methacrylate compound, but is preferably an acrylate compound, that is, $R^1$ is a hydrogen atom.

The divalent linking group denoted by X in Formula (1) is not particularly limited as long as the effects of the present invention are not greatly impaired; it is preferably a divalent hydrocarbon group or a divalent group in which at least one hydrocarbon group and at least one group selected from the group consisting of an ester bond, a urethane bond, a urea bond, an ether bond, and an amide bond are combined.

X is preferably a divalent hydrocarbon group. The divalent hydrocarbon group is preferably a divalent hydrocarbon group having 1 to 20 carbons, and more preferably a divalent hydrocarbon group having 1 to 5 carbons; the hydrocarbon group is preferably an alkylene group, and particularly preferably one having 1 carbon, that is, a methylene group.

Furthermore, when X is a divalent linking group in which at least one hydrocarbon group and at least one bond selected from the group consisting of an ester bond, a urethane bond, a urea bond, an ether bond, and an amide bond are combined, the hydrocarbon group is preferably an alkylene group having 1 to 5 carbons. It is preferably a divalent linking group in which at least one alkylene group and at least one bond selected from the group consisting of an ester bond (-COO- or -OCO-), a urethane bond (-NRCOO- or -OCONR- (R denotes a hydrogen atom or an alkyl group)), a urea bond (-NRCONR'- (R and R' denote a hydrogen atom or an alkyl group)), an ether bond (-O-), and an amide bond (-NRCO- or -CONR- (R denotes a hydrogen atom or an alkyl group)) are combined. Among them, a divalent linking group in which at least one alkylene group and at least one ether bond are combined is preferable.

The divalent linking group in which an alkylene group and an ether bond are combined is preferably *-(alkylene group)-O-** or *-(alkylene group)-O-(alkylene groups)-** (* denotes the part where X and the -O- of the (meth)acryloxy group are bonded, and ** denotes the part where X and the quaternary carbon atom are bonded.).

The divalent linking group in which the alkylene group and an ether bond are combined is preferably a poly(alkyleneoxy) group or poly(alkyleneoxy)alkyl group having a plurality of -(alkylene group)-O- moieties, and in this case the total number of carbons of the linking group is preferably 2 to 60, and more preferably 4 to 20.

Specific preferred examples of compounds represented by Formula (1) include, but of course are not limited to, compounds (A-1-1) to (A-1-4) shown below.

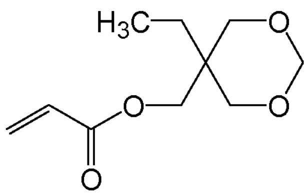

( A-1-1 )

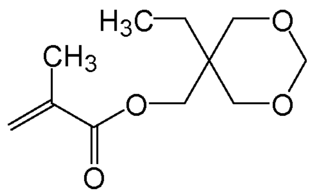

( A-1-2 )

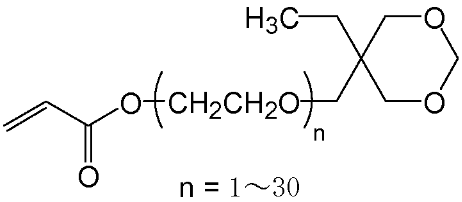

n = 1∼30

( A-1-3 )

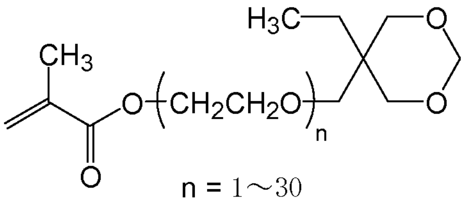

n = 1∼30

( A-1-4 )

Among them, cyclic trimethylolpropane formal acrylate (A-1-1) and cyclic trimethylolpropane formal methacrylate (A-1-2) are preferable, and cyclic trimethylolpropane formal acrylate (A-1-1) is particularly preferable.

The content of Component A-2 in the ink composition of the present invention is preferably 10 to 80 mass% relative to the entire ink composition, more preferably 15 to 70 mass%, and particularly preferably 20 to 60 mass%. When in this range, an ink composition that can give an image having excellent blocking resistance and scratch resistance can be obtained.

(Component A-3) Compound represented by Formula (2)

The ink composition of the present invention preferably comprises (Component A-3) a compound represented by Formula (2) as (Component A) the radically polymerizable compound.

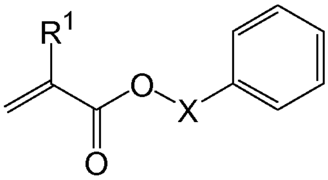

( 2 )

(In Formula (2), $R^1$ denotes a hydrogen atom or a methyl group, and X denotes a single bond or a divalent linking group.)

$R^1$ in Formula (2) denotes a hydrogen atom or a methyl group, and in terms of cure rate, a hydrogen atom is preferable.

X in Formula (2) is preferably an alkylene group or a group in which at least one alkylene group and at least one bond selected from the group consisting of an ether bond, an ester bond, a urethane bond, and a urea bond are combined, and is more preferably an alkylene group, an alkyleneoxy group, or a polyalkyleneoxy group.

The alkylene group, the alkyleneoxy group, and the polyalkyleneoxy group preferably have 2 to 10 carbons, more preferably 2 to 4 carbons, and particularly preferably 2 carbons. Furthermore, the alkylene group, the alkyleneoxy group, and the polyalkyleneoxy group may have a substituent, examples of the substituent including an alkyl group, an aryl group, a halogen atom, and a hydroxy group.

Among them, the compound represented by Formula (2) is preferably phenoxyethyl (meth)acrylate, and particularly preferably phenoxyethyl acrylate.

The content of Component A-3 in the ink composition of the present invention is preferably 10 to 80 mass% relative to the entire mass of the ink composition, more preferably 15 to 70 mass%, and particularly preferably 20 to 60 mass%. When in the above-mentioned range, an ink composition that can give an image having excellent blocking resistance and scratch resistance can be obtained.

(Polymerizable compound other than Component A-1 to Component A-3)

The ink composition of the present invention may comprise a polymerizable compound other than Component A-1 to Component A-3.

As the other polymerizable compound, a known polymerizable compound may be used, and examples thereof include a (meth)acrylate compound, a vinyl ether compound, an allyl compound, an *N*-vinyl compound, and an unsaturated carboxylic acid other than Component A-1 to Component A-3. Examples thereof include radically polymerizable monomers described in JP-A-2009-221414, polymerizable compounds described in JP-A-2009-209289, and ethylenically unsaturated compounds described in JP-A-2009-191183.

As the polymerizable monomer other than Component A-1 to Component A-3, although there is no particular

limitation, an ethylenically unsaturated compound is preferable. It is preferable for a monofunctional monomer other than Component A-1 to Component A-3 to be contained, and it is more preferable for a monofunctional (meth)acrylate compound other than Component A-1 to Component A-3 to be contained.

<Other monofunctional monomer>

The ink composition of the present invention may comprise a monofunctional monomer other than Components A-1 to A-3 above. Said other monofunctional monomer is preferably a monofunctional (meth)acrylate monomer, and examples thereof include norbornyl (meth)acrylate, isobornyl (meth)acrylate, tetrahydrofurfuryl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, *N*-phthalimidoethyl (meth)acrylate, pentamethylpiperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, 2-hydroxyethyl (meth)acrylate, 2-butoxyethyl (meth)acrylate, carbitol (meth)acrylate, methyl (meth)acrylate, *n*-butyl (meth)acrylate, 2-(2-ethoxyethoxy)ethyl (meth)acrylate, 2-(2-butoxyethoxy)ethyl (meth)acrylate, and dimethylaminomethyl (meth)acrylate.

Among them, isobornyl (meth)acrylate is preferable, and isobornyl acrylate is particularly preferable.

Preferred examples of the other monofunctional monomer include an aromatic group-containing monofunctional (meth)acrylate compound and an aromatic group-containing monofunctional (met)acrylamide compound. The cyclic structure of the aromatic group-containing monofunctional (meth)acrylate compound may contain a hetero atom such as O, N, S, etc.

Examples of the aromatic group-containing monofunctional (meth)acrylate compound and (meth)acrylamide compound other than the compound represented by Formula (2) (Component A-3) include 1-naphthyl (meth)acrylate, 2-naphthyl (meth)acrylate, 2-$\alpha$-naphthyloxyethyl (meth)acrylate, 2-$\beta$-naphthyloxyethyl (meth)acrylate, 2-anthryl (meth)acrylate, 9-anthryl (meth)acrylate, 1-phenanthryl (meth)acrylate, 2-phenanthryl (meth)acrylate, an ethylene oxide-modified cresol (meth)acrylate (hereinafter, 'ethylene oxide' is also called 'EO'), p-nonylphenoxyethyl (meth)acrylate, p-nonylphenoxypolyethylene glycol (meth)acrylate, p-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, N-(1,1-dimethyl-2-phenyl)ethyl (meth)acrylamide, *N*-diphenylmethyl (meth)acrylamide, *N*-phthalimidomethyl (meth)acrylamide, and *N*-(1,1'-dimethyl-3-(1,2,4-triazol-1-yl))propyl (meth)acrylamide.

<Polyfunctional (meth)acrylate>

The ink composition of the present invention may further comprise a polyfunctional (meth)acrylate other than Component A-1 to Component A-3 as (Component A) the radically polymerizable compound.

Difunctional (meth)acrylate and trifunctional (meth)acrylate may preferably be used as the polyfunctional (meth)acrylates.

Examples of the difunctional (meth)acrylates include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, and 2,2-bis(4-(meth)acryloxypolyethoxyphenyl)propane.

Among them, dipropylene glycol di(meth)acrylate is preferably, and dipropylene glycol diacrylate is particularly preferable.

As the difunctional (meth)acrylate compound, a difunctional (meth)acrylate compound having an optionally branched hydrocarbon chain having at least 5 carbons may preferably be used.

Examples of the difunctional (meth)acrylate compound include a difunctional (meth)acrylate compound having in the molecule a hydrocarbon chain having at least 5 carbons, and specific examples include neopentyl glycol di(meth)acrylate, a propylene oxide (PO)-modified neopentyl glycol di(meth)acrylate, hexanediol di(meth)acrylate, a PO-modified hexanediol di(meth)acrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, 2-*n*-butyl-2-ethyl-1,3-propanediol di(meth)acrylate, cyclohexanedimethanol di(meth)acrylate, and cyclohexane di(meth)acrylate.

Preferred examples of the trifunctional (meth)acrylate compound include pentaerythritol tri(meth)acrylate, trimethylolethane tri(meth)acrylate, and trimethylolpropane tri(meth)acrylate. Preferred examples of tetrafunctional (meth)acrylate compounds include pentaerythritol tetra(meth)acrylate and dipentaerythritol tetra(meth)acrylate.

<Other polymerizable monomer>

Examples of the other polymerizable monomer include unsaturated carboxylic acids such as acrylic acid, methacrylic acid, itaconic acid, crotonic acid, isocrotonic acid, and maleic acid, and salts thereof, an ethylenically unsaturated group-containing anhydride, acrylonitrile, styrene and, furthermore, radically polymerizable compounds such as various types of unsaturated polyesters, unsaturated polyethers, unsaturated polyamides, and unsaturated urethane.
Examples of the other polymerizalbe monomer include *N*-methylol (meth)acrylamide, diacetone (meth)acrylamide, (meth)acrylic acid derivatives such as epoxy (meth)acrylate, allyl compound derivatives such as allyl glycidyl ether, diallyl phthalate, triallyl trimellitate, etc.
More specifically, commercially available or industrially known radically polymerizable or crosslinking monomers, oligomers, and polymers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.
Furthermore, as the other polymerizable compound, it is preferable to use a monofunctionalvinyl ether compound.
Examples of monofunctional vinyl ether compounds that are suitably used include ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, *n*-propyl vinyl ether, isopropyl vinyl ether, isopropenyl vinyl ether, dodecyl vinyl ether, and diethylene glycol monovinyl ether.
Polyfunctional vinyl ether compounds may also be used.
Examples of polyfunctional vinyl ether compounds that are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

(Polymerizable oligomer and polymerizable polymer)

The ink composition of the present invention may comprise as a polymerizable compound a polymerizable oligomer or a polymerizable polymer, but the content thereof is preferably no greater than 10 mass% of the entire ink composition, more preferably no greater than 5 mass%, yet more preferably no greater than 3 mass%, and particularly preferably none.
'Oligomer' is generally a polymer in which a limited number (usually 5 to 100) of monomers are bonded. The weight-average molecular weight of the oligomer is preferably 800 to 10,000, and more preferably 1,000 to 5,000.
In the ink composition of the present invention, the total amount of monofunctional monomer is at least 75 mass% of the entire ink composition. Furthermore, no polyfunctional monomer is contained in the ink composition of the present invention, or the total amount of polyfunctional monomer is no greater than 10 mass% of the entire ink composition.
When in this range, a cured film (image) having excellent adhesion and excellent blocking resistance and surface scarring resistance can be obtained. In particular, even when polypropylene (PP), which generally has low adhesion to an image, is used as a support, good image adhesion is obtained.
Although the detailed mechanism of action is unclear, it is surmised to be as follows. It is surmised that a cured film formed using an ink composition having a high monofunctional monomer content and a low polyfunctional monomer content has low crosslink density, the strain energy at the interface between the cured film (image) and the support (recording medium) after curing the ink can be minimized, and excellent adhesion can be obtained for various types of support.
Furthermore, it is surmised that suppressing the crosslink density of the cured film enables a surfactant to be localized on the cured film surface during curing and/or after curing, thus achieving excellent blocking resistance and surface scarring resistance.
The total amount of monofunctional monomer is preferably at least 80 mass% of the entire ink composition, and more preferably at least 85 mass%.
Furthermore, the total amount of polyfunctional monomer is preferably 0.5 to 8 mass% of the entire ink composition, and more preferably 1.0 to 4.0 mass%.

(Component) Polymerization initiator

The ink composition of the present invention comprises (Component B) a polymerization initiator. As (Component B) the polymerization initiator, a radical polymerization initiator is preferable, and a radical photopolymerization initiator is more preferable. An ink composition discharged onto a support is cured by irradiating with actinic radiation. This is due to the polymerization initiator contained in the ink composition of the present invention undergoing decomposition by irradiation with actinic radiation to thus generate a polymerization-initiating species such as a radical, and the initiating species functioning to cause and promote a polymerization reaction of a polymerizable compound.
The polymerization initiator in the present invention includes not only a compound that generates a polymerization-initiating species by absorbing external energy such as actinic radiation but also a compound that promotes decomposition of a polymerization initiator by absorbing specific actinic radiation (a so-called sensitizer).
If a sensitizer is present together with the polymerization initiator in the ink composition of the present invention, the sensitizer in the system absorbs actinic radiation to thus attain an excited state and comes into contact with the polymerization initiator to promote decomposition of the polymerization initiator, thereby enabling a more sensitive curing reaction to be achieved. Examples of the sensitizer include those described in JP-A-2008-208190.
The polymerization initiator is a polymerization initiator that is used in a radical polymerization reaction, and preferable examples thereof include (Component B-1) an acylphosphine oxide compound, (Component B-2) a thioxanthone compound, and (Component B-3) an $\alpha$-hydroxyketone compound.
Components B-1 to B-3 are explained below.

(Component B-1) Acylphosphine oxide compound

The ink composition of the present invention comprises (Component B-1) an acylphosphine oxide compound as (Component B) a polymerization initiator. Examples of Component B-1 include (Component B-1-1) a bisacylphosphine oxide compound and (Component B-1-2) a monoacylphosphine oxide compound. Preferred examples of Component B-1 include bisacylphosphine oxide compounds and monoacylphosphine oxide compounds described in paragraphs 0080 to 0098 of JP-A-2009-096985.

(Component B-1-1) Bisacylphosphine oxide compound

As Component B-1-1, a compound having a partial structure represented by Formula (b-1-1) in the molecular structure is preferable.

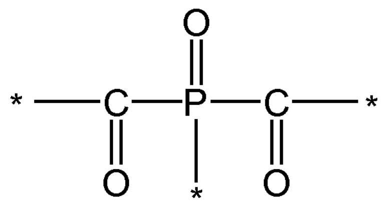

(b-1-1)

(In Formula (b-1-1), * denotes a bonding position.)
Component B-1-1 is particularly preferably a compound represented by Formula (b-1-2).

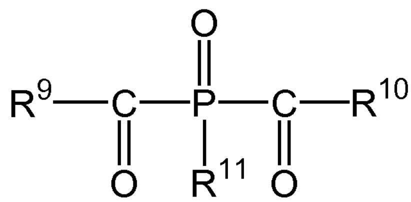

(b-1-2)

(In Formula (b-1-2), $R^9$, $R^{10}$ and $R^{11}$ independently denote an aromatic hydrocarbon group, which may have a methyl group or an ethyl group as a substituent.)
With regard to a bisacylphosphine oxide compound represented by Formula (b-1-2), it is preferable that $R^9$ to $R^{11}$ are phenyl groups, which may have a methyl group as a substituent, and it is more preferable that $R^{11}$ is a phenyl group and $R^9$ and $R^{10}$ are phenyl groups having 1 to 3 methyl groups.
Among them, as the bisacylphosphine oxide compound represented by Formula (b-1-2), bis(2,4,6-trimethylbenzoyl)phenylphosphine oxide (IRGACURE 819, manufactured by BASF Japan) is preferable.

(Component B-1-2) Monoacylphosphine oxide

In the present invention, preferable examples of (Component B) the radical polymerization initiator include (Component B-1-2) a monoacylphosphine compound.

As Component B-1-2, a compound having a partial structure represented by Formula (b-2-1) in the molecular structure is preferable.

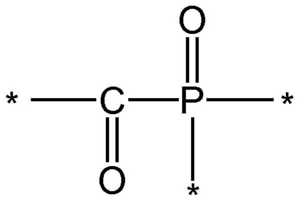

(b-2-1)

(In Formulae (b-2-1), * denotes a bonding position.)

Component B-1-2 is particularly preferably a compound represented by Formula (b-2-2).

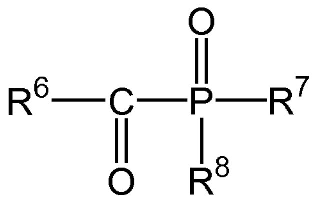

(b-2-2)

(In Formula (b-2-2), $R^6$, $R^7$, and $R^8$ independently denote an aromatic hydrocarbon group, which may have a methyl group or an ethyl group as a substituent.)

With regard to a monoacylphosphine oxide compound represented by Formula (b-2-2), it is preferable that $R^6$ to $R^8$ are phenyl groups, which may have a methyl group as a substituent, and it is more preferable that $R^7$ and $R^8$ are phenyl groups and $R^6$ is a phenyl group having 1 to 3 methyl groups.

Among them, as the monoacylphosphine oxide compound represented by Formula (b-2-2), 2,4,6-trimethylbenzoyldiphenylphosphine oxide (Darocur TPO manufactured by BASF Japan, Lucirin TPO manufactured by BASF) is preferable.

In the present invention, a colored ink composition such as a magenta ink composition preferably comprises (Component B-1) an acylphosphine oxide compound. It is particularly preferable that a bisacylphosphine oxide compound and a monoacylphosphine oxide compound are used in combination.

In particular, a bisacylphosphine oxide compound gives high sensitivity even with a small amount thereof added. Compared with a monoacylphosphine oxide compound, a bisacylphosphine oxide compound can improve the sensitivity of an ink with a small amount thereof added, but it is not suitable for a clear ink from the viewpoint of a printed material being colored yellow, and because of this it is preferable that a bisacylphosphine oxide compound and a monoacylphosphine oxide compound are used in combination in a color ink (colored ink composition) for which yellowing of an image is inconspicuous.

In the ink composition, when the total amount of radical polymerization initiator is 100 parts by mass, the total amount of Component B-1 is preferably at least 20 parts by mass, more preferably at least 25 parts by mass, and yet more preferably at least 30 parts by mass.

The content of Component B-1 is preferably 2 to 15 mass% of the entire ink composition, and more preferably 3 to 10 mass%. The content of the bisacylphosphine oxide compound (Component B-1-1) in a color ink is preferably 1.0 to 5.5 mass% of the entire ink composition, and more preferably 2.5 to 4.5 mass%, and the content of the monoacylphosphine oxide compound (Component B-1-2) is preferably 1.0 to 9.5 mass% of the entire ink composition, and more preferably 2.0 to 6.0 mass%.

(Component B-2) Thioxanthone compound

The ink composition of the present invention preferably comprises (Component B-2) a thioxanthone compound.

The thioxanthone compound used in the present invention is not particularly limited, and a known thioxanthone

compound may be used. The thioxanthone compound is preferably a compound represented by Formula (b-2).

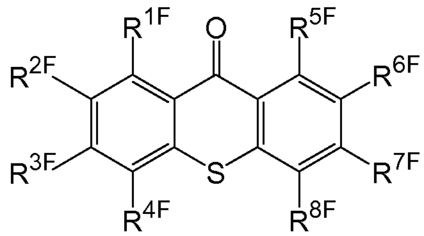

( b - 2 )

In Formula (b-2), $R^{1F}$, $R^{2F}$, $R^{3F}$, $R^{4F}$, $R^{5F}$, $R^{6F}$, $R^{7F}$, and $R^{8F}$ independently denote a hydrogen atom, an alkyl group, a halogen atom, a hydroxy group, a cyano group, a nitro group, an amino group, an alkylthio group, an alkylamino group (including monosubstituted and disubstituted cases), an alkoxy group, an alkoxycarbonyl group, an acyloxy group, an acyl group, a carboxy group, or a sulfo group. The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of $R^{1F}$, $R^{2F}$, $R^{3F}$, $R^{4F}$, $R^{5F}$, $R^{6F}$, $R^{7F}$, and $R^{8F}$ that are adjacent may be bonded to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a condensed ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-dichlorothioxathone, 2,3-diethylthioxanthone, 1-chloro-4-propoxythioxanthone, 2-cyclohexylthioxathone, 4-cyclohexylthioxathone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *n*-allylthioxanthone-3,4-dicarboxyimide, *n*-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9*H*-thioxanthon-2-yloxy)-*N,N,N*-trimethyl-1-propanaminium chloride. Among them, from the viewpoint of ready availability and curability, thioxanthone, 2,3-diethylthioxanthone, 2,4-diethylthioxanthone, 2,4-dichlorothioxanthone, 1-chloro-4-propoxythioxathone, 2-cyclohexylthioxanthone, 4-cyclohexylthioxanthone, 2-isopropylthioxanthone, and 4-isopropylthioxanthone are preferable, and 2-isopropylthioxanthone and 4-isopropylthioxanthone are more preferable.

The content of Component B-2 is preferably in the range of 0.1 to 5.0 mass% relative to the entire ink composition, more preferably 0.5 to 4.0 mass%.

(Component B-3) α-Hydroxyketone compound

The ink composition of the present invention preferably comprises (Component B-3) an α-hydroxyketone compound.

Examples of the α-hydroxy ketone compound include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone; among them, a 1-hydroxycyclohexyl phenyl ketone compound is preferable. In the present invention, the 1-hydroxycyclohexyl phenyl ketone compound includes a compound in which 1-hydroxycyclohexyl phenyl ketone is substituted with any substituent. The substituent may be selected freely as long as capability as a radical polymerization initiator is exhibited, and specific examples include an alkyl group having 1 to 4 carbon atoms. Among them, 1-hydroxycyclohexyl phenyl ketone (IRGACURE 184, manufactured by BASF) is more preferable.

The content of Component B-3 is preferably in the range of 1.0 to 5.0 mass% relative to the entire ink composition, more preferably 2.0 to 4.0 mass%.

A preferred mode of Component B in the present invention is that it comprises at least one of Components B-1 to B-3, more preferably comprises Components B-1 and B-2, and yet more preferably comprises all of Components B-1 to B-3.

The total content of Component B is preferably in the range of 5.0 to 20.0 mass% relative to the entire ink composition, more preferably 7.0 to 19.0 mass%, and yet more preferably 9.0 to 18.0 mass%.

When the content is in the above-mentioned range, the ink composition having excellent curability can be obtained.

The ink composition of the present invention may comprise other polymerization initiator other than Component B-1 to Component B-3. Examples of the other polymerization initiator include an $\alpha$-aminoalkylketone, an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond.

Details of the above-mentioned polymerization initiators are known to a person skilled in the art, and are described in for example paragraphs 0090 to 0116 of JP-A-2009-185186.

(Component C) Colorant

In the present invention, the ink composition comprises (Component C) a colorant in order to improve the visibility of a formed image area. The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, C. I. Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, C. I. Pigment Violet 3, 19, 23, 29, 30, 37, 50, or 88, and C. I. Pigment Orange 13, 16, 20, or 36; as a blue or cyan pigment, C. I. Pigment Blue 1, 15, 15:1, 15:2, 15:3, 15:4, 15:6, 16, 17:1, 22, 27, 28, 29, 36, or 60; as a green pigment, C. I. Pigment Green 7, 26, 36, or 50; as a yellow pigment, C. I. Pigment Yellow 1, 3, 12, 13, 14, 17, 34, 35, 37, 55, 74, 81, 83, 93, 94, 95, 97, 108, 109, 110, 120, 137, 138, 139, 150, 153, 154, 155, 157, 166, 167, 168, 180, 185, or 193; as a black pigment, C. I. Pigment Black 7, 28, or 26; as a white pigment, C. I. Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

The colorant is preferably added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

In the preparation of the ink composition, the colorant may be added directly to the ink composition together with other components. Furthermore, in order to improve dispersibility it may be added in advance to a solvent or a dispersing medium such as a polymerizable compound used in the present invention, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add in advance the colorant to the dispersing medium such as the polymerizable compound. That is, it is preferable not to comprise a solvent. As a polymerizable compound used as the dispersing medium of the colorant, it is preferable in terms of dispersion suitability to select a monomer having low viscosity. The colorants may be used by appropriately selecting one type or two or more types thereof according to the intended purpose of the ink composition.

When a colorant such as a pigment that is present as a solid in the ink composition is used, it is preferable for the colorant, the dispersant, the dispersing medium, dispersion conditions, and filtration conditions to be set so that the

average particle size of colorant particles is preferably 0.005 to 0.5 μm, more preferably 0.01 to 0.45 μm, and yet more preferably 0.015 to 0.4 μm. It is preferable for the colorant to control its particle size, since clogging of a head nozzle can be suppressed and the storage stability, transparency, and curing sensitivity of the ink composition can be maintained.

The content of the colorant in the ink composition is appropriately selected according to the color and the intended purpose, and is preferably 0.01 to 30 mass% relative to the mass of the entire ink composition.

<Dispersant>

The ink composition of the present invention preferably comprises a dispersant. Especially, when the pigment is used, the ink composition preferably comprises a dispersant in order to stably disperse the pigment in the ink composition. As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), Ionet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15 mass% relative to the mass of the entire ink composition.

(Component D) Silicone-based surfactant with HLB of at least 2 but no greater than 7

The ink composition of the present invention comprises (Component D) a silicone-based surfactant with an HLB of at least 2 but no greater than 7. Furthermore, it comprises Component D at at least 0.4 mass% but no greater than 4 mass% of the entire ink composition. HLB is an abbreviation for Hydrophile-Lipophile Balance and is one of the indicators denoting the effect of a surfactant. The larger the HLB value, the higher the hydrophilicity, and the smaller the HLB value, the higher the lipophilicity.

For a silicone-based surfactant, the smaller the HLB value, the higher the hydrophobicity, that is, the greater the proportion of the silicone moiety, and the stronger the surfactant performance tends to be shown.

In the present invention, it has been found that, by adding a specific content of a silicone-based surfactant with an HLB of no greater than 7, which is a relatively high surface activity, to the ink composition, an image having excellent blocking resistance and surface scarring resistance is obtained.

When the HLB value of the silicone-based surfactant is less than 2, the miscibility is low, and when it exceeds 7, a sufficient effect cannot be obtained.

The HLB of Component D is 2 to 7, preferably 2 to 5, and more preferably 2 to 4.

Furthermore, in the present invention, the amount of Component D added is at least 0.4 mass% but no greater than 4 mass% of the entire ink composition. Due to it being contained at at least 0.4 mass%, which is higher than the amount of surfactant added to a conventional ink composition, an image having excellent blocking resistance and surface scarring resistance is obtained. When it is less than 0.4 mass%, sufficient effects cannot be obtained in terms of blocking resistance and surface scarring resistance, and when it exceeds 4 mass%, the continuous discharge stability becomes poor. It is surmised that this is because when it is used in an amount exceeding 4 mass%, since the meniscus holding force between the ink and the nozzle plate surface of an inkjet nozzle is degraded, the ink flows over the nozzle plate during continuous discharge, builds up, and covers another nozzle, and discharge cannot be carried out precisely.

The content of Component D is preferably 0.5 to 2.0 mass%, and more preferably 0.7 to 1.5 mass%.

In the present invention, Component D is most preferably a polyether-modified silicone oil. Examples of the polyether-modified silicone oil include one in which a polyether group is introduced into some of the methyl groups of a polydimethylsiloxane. With regard to modified silicone oils, there are polyether-modified silicone oils as well as modified silicone oils into which various types of organic groups have been introduced, such as a methylstyrene-modified silicone oil, an olefin-modified silicone oil, an alcohol-modified silicone oil, and an alkyl-modified silicone oil, and in order to obtain a printed material having excellent blocking resistance and surface scarring resistance, it is most preferable that a

polyether-modified silicone oil is used. Furthermore, a polyether-modified silicone oil is excellent in terms of miscibility and affinity with a UV-curable compound and a composition formed therefrom. Moreover, with regard to the polyether-modified silicone oil used in the present invention, a polyether group that is introduced into a modified silicone oil is preferably in a side chain.

Component D may be used by appropriately selecting from commercially available silicone-based surfactants. Specific examples thereof include KF-352A (HLB = 7), KF-945 (HLB = 4), KF-6020 (HLB = 4), X22-6191 (HLB = 2), and KF-6015 (HLB = 5) (all manufactured by Shin-Etsu Chemical Co., Ltd.).

Various equations for determining HLB value have been proposed.

In accordance with Griffin's method, the HLB value is defined by the equation below.

$$\text{HLB value} = 20 \times \text{sum total of formula weights of hydrophile portions/molecular weight}$$

In accordance with the Kawakami method, it is defined by

$$\text{HLB value} = 7 + 11.7\ \log(\text{sum total of formula weights of hydrophile portions/sum total of formula weights of lipophile portions}).$$

On the other hand, experimentally, there is a method in which the amount of surfactant extracted into a solvent such as octylphenol ethoxylate is calculated using HPLC (high performance liquid chromatography), GPC (gel permeation chromatography), etc., and compared with the amount extracted of a surfactant whose HLB is known, or the HLB value may be determined from the equation below by mixing a surfactant whose HLB is known ($HLB_{known}$) and a surfactant whose HLB is unknown ($HLB_{unknown}$) at various mixing ratios, forming an emulsion mixture with an oil whose required HLB is known ($HLB_{oil}$), and identifying the surfactant mixing ratio that gives the most stable emulsion.

$$HLB_{(oil)} = \{(W_{known} \times HLB_{known}) + (W_{unknown} \times HLB_{unknown})\}/(W_{known} + W_{unknown})$$

Here, $W_{known}$ is the mass fraction of the surfactant whose HLB is known, and $W_{unknown}$ is the mass fraction of the surfactant whose HLB is unknown.

Furthermore, as a method for determining HLB value by experiment, a method in which it is calculated from the cloud number is known.

$$\text{HLB} = \text{cloud number A} \times 0.89 + 1.11$$

The cloud number A is measured by a known method, and a method described on pages 324 to 325 of 'Kaimenkasseizai Binran' (Surfactant Handbook), Sangyo Tosho, July 5, 1960 can be cited as an example.

Specifically, 2.5 g of a sample is weighed, and 98% ethanol is added thereto to make the volume up to 25 mL (25 mL measuring flask is used). Subsequently, a fraction is taken therefrom using a 5 mL transfer pipette, placed in a 50 mL beaker, and titrated with a 2% phenol aqueous solution using a 25 mL burette while stirring (by use of a magnetic stirrer) at a constant temperature of 25°C. The end point is defined as being when the liquid becomes turbid, and the number of mL of 2% phenol aqueous solution required for the titration is defined as the cloud number A.

In the present invention, it is preferable that HLB value is determined by a known method such as Griffin's method (HLB value = 20 × sum total of formula weights of hydrophile portions/molecular weight) or by HPLC, and it is most preferable that it is determined by Griffin's method.

<Other surfactant>

The ink composition of the present invention may comprise other surfactant.

Examples of the other surfactant include the surfactants below. For example, those described in JP-A-62-173463 and JP-A-62-183457 can be cited. Specific examples thereof include anionic surfactants such as dialkylsulfosuccinic acid salts, alkylnaphthalenesulfonic acid salts, and fatty acid salts, nonionic surfactants such as polyoxyethylene alkyl

ethers, polyoxyethylene alkyl allyl ethers, acetylene glycols, and polyoxyethylene/polyoxypropylene block copolymers, and cationic surfactants such as alkylamine salts and quaternary ammonium salts. As the above known surfactants, an organofluoro compound may be used. The organofluoro compound is preferably hydrophobic. Examples of the organofluoro compound include fluorine-based surfactants, oil-like fluorine-based compounds (e.g. fluorine oils), and solid fluorine compound resins (e.g. tetrafluoroethylene resin), and those described in JP-B-57-9053 (8th to 17th columns) and JP-A-62-135826.

The other surfactant used in the present invention is not particularly limited to the surfactants described above, and it may be an additive that, for the concentration added, is capable of reducing the surface tension efficiently.

The content of the other surfactant is preferable less than 0.4 mass%, more preferably 0 to 0.3 mass%, and yet more preferably 0 to 0.2 mass%.

When Component D is 100 mass%, the other surfactant is preferably less than 100 mass%, more preferably less than 50 mass%, more preferably less than 10 mass%, and most preferably none, that is, none being contained.

(Component E) Inactive methyl methacrylate homopolymer and/or copolymer having weight-average molecular weight of 4,000 to 120,000

The ink composition of the present invention preferably comprises (Component E) an inactive methyl methacrylate homopolymer and/or copolymer having a weight-average molecular weight of 4,000 to 120,000. Component E is explained below.

The 'inactive methyl methacrylate homopolymer and/or copolymer' in the ink composition of the present invention means a methyl methacrylate homopolymer and/or methyl methacrylate copolymer that does not have a polymerizable functional group that can undergo a further chain polymerization reaction and that does not have a crosslinkable and/or crosslinking functional group that can undergo a further sequential crosslinking reaction. That is, it means a methyl methacrylate homopolymer and/or copolymer in a state that causes substantially no polymerization reaction or crosslinking reaction.

Furthermore, in the ink composition of the present invention, the inactive methyl methacrylate homopolymer and/or copolymer is preferably soluble in or miscible with Component A, etc. contained in the ink composition of the present invention.

Preferred examples of the inactive methyl methacrylate homopolymer include, but are not particularly limited to, a homopolymer formed from methyl methacrylate by a known polymerization method and a commercially available homopolymer product.

Preferred examples of the inactive methyl methacrylate copolymer include, but are not particularly limited to, a copolymer formed from methyl methacrylate and another polymerizable compound by a known polymerization method and a commercially available copolymer product. The copolymer may be any of a random copolymer, a block copolymer, or a graft copolymer. The other polymerizable compound used in copolymerization is not particularly limited as long as the copolymer after polymerization is inactive, and there can be preferably cited a (meth)acrylate compound, and more preferably a methacrylate compound.

The content of Component E is preferably at least 0.3 mass% but no greater than 2.0 mass% of the entire ink composition. When the content of Component E is in the above-mentioned range, the discharge stability is excellent.

It is surmised that, with regard to improvement of the stripe unevenness of an image in the ink composition of the present invention, internal curability is improved by the introduction of Component E, which has high hardness, interference between fired droplets is thereby suppressed, and as a result an image having inconspicuous stripe unevenness is obtained.

In the ink composition of the present invention, the weight-average molecular weight of Component E is a weight-average molecular weight on a polystyrene basis measured by gel permeation chromatography (GPC). Specific examples of GPC measurement equipment include an HPLC LC-10AD manufactured by Shimadzu Corporation. Furthermore, this GPC measurement employs as a column for example a Shodex GPC-KF-804 manufactured by Showa Denko K.K. and as an eluent for example tetrahydrofuran (THF), and the weight-average molecular weight is calculated by comparison with the molecular weight of a polystyrene standard.

The weight-average molecular weight of Component E is at least 4,000 but no greater than 120,000, preferably 8,000 to 80,000, more preferably 10,000 to 75,000, yet more preferably 10,000 to 60,000, and particularly preferably 20,000 to 50,000. When the weight-average molecular weight of Component E is at least 4,000 but no greater than 120,000, good discharge stability is obtained, and an image having little stripe unevenness is obtained.

Preferred examples of copolymerization monomers other than methyl methacrylate include ethyl (meth)acrylate, *n*-propyl (meth)acrylate, isopropyl (meth)acrylate, *n*-butyl (meth)acrylate, isobutyl (meth)acrylate, *t*-butyl (meth)acrylate, *n*-pentyl (meth)acrylate, isopentyl (meth)acrylate, *t*-pentyl (meth)acrylate, neopentyl (meth)acrylate, 1-naphthyl (meth)acrylate, 2-naphthyl (meth)acrylate, 2-α-naphthoxyethyl (meth)acrylate, 2-β-naphthoxyethyl (meth)acrylate, 2-anthryl (meth)acrylate, 9-anthryl (meth)acrylate, 1-phenanthryl (meth)acrylate, 2-phenanthryl (meth)acrylate, an ethylene

oxide-modified cresol (meth)acrylate, *p*-nonylphenoxyethyl (meth)acrylate, *p*-nonylphenoxypolyethylene glycol (meth)acrylate, *p*-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, *N*-phthalimidoethyl (meth)acrylate, pentamethylpiperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, 2-hydroxyethyl (meth)acrylate, butoxyethyl (meth)acrylate, carbitol (meth)acrylate, *n*-butyl (meth)acrylate, allyl (meth)acrylate, glycidyl (meth)acrylate, dimethylaminomethyl (meth)acrylate, and an oligoester (meth)acrylate. Among them, *n*-butyl (meth)acrylate is preferable, and *n*-butyl methacrylate is particularly preferable.

The proportion as a ratio by mass of methyl methacrylate-derived repeating unit in the methyl methacrylate copolymer used in the ink composition of the present invention is 10.0 to 90.0 mass% of the copolymer, and more preferably 30.0 to 85.0 mass%.

When in this range, the solubility and/or miscibility of the methyl methacrylate copolymer in a polymerizable compound such as Component A-1 used in the present invention improve, and it is possible to prevent discharge stability from being degraded by deposition, etc of the ink composition of the present invention. Furthermore, the ink composition of the present invention can give an image cured film having excellent blocking resistance and surface scarring resistance due to the hard structure of the methyl methacrylate part of the copolymer.

Among the inactive methyl methacrylate homopolymer and/or copolymer used in the ink composition of the present invention, the homopolymer is preferable in terms of convenience since it is easy to select one from homopolymers having various molecular weights, and the copolymer is preferable since its physical properties such as solubility or miscibility can be changed by selecting the type of the other (meth)acrylate monomer.

The inactive methyl methacrylate homopolymer and/or copolymer used in the present invention can be obtained by a method known in the art. It may be synthesized by a polymerization reaction using a corresponding (meth)acrylate monomer or it may be obtained as a commercially available product.

Examples of commercially available inactive methyl methacrylate homopolymers and/or copolymers used in the present invention include polymethyl methacrylate (molecular weight 10,000, catalog No. 81497; molecular weight 20,000, catalog No. 81498; molecular weight 50,000, catalog No. 81501), methyl methacrylate/n-butyl methacrylate copolymer (ratio by mass 85/15, molecular weight 75,000; catalog No. 474029), etc. from Aldrich; Elvacite2013 (methyl methacrylate/*n*-butyl methacrylate copolymer, ratio by mass 36/64, molecular weight 37,000), 2021, 2614, 4025, 4026, 4028, etc. from Lucite International; Paraloid DM55, B66, etc. from Rohm and Haas; and BR113, 115, etc. from Dinal America.

The content of Component E is preferably at least 0.3 mass% but no greater than 2.0 mass% relative to the total mass of the ink composition, more preferably 0.5 to 1.9 mass%, and yet more preferably 0.8 to 1.8 mass%. When in this range, an ink composition having excellent discharge stability, blocking resistance, and surface scarring resistance is obtained.

<Other components>

The ink composition of the present invention may comprise as necessary, in addition to the above-mentioned components, a co-sensitizer, a UV absorber, an antioxidant, an antifading agent, a conductive salt, a solvent, a basic compound, etc. As the other components, a known component may be used, and examples thereof include those described in JP-A-2009-221416.

Furthermore, from the viewpoint of storage properties and suppression of head clogging, the ink composition of the present invention preferably comprises a polymerization inhibitor.

The polymerization inhibitor is preferably added at 200 to 20,000 ppm relative to the total mass of the ink composition of the present invention.

Examples of the polymerization inhibitor include a nitroso-based polymerization inhibitor, a hindered amine-based polymerization inhibitor, hydroquinone, benzoquinone, *p*-methoxyphenol, TEMPO, TEMPOL, and Al cupferron.

<Surface tension of ink composition>

The ink composition of the present invention has a surface tension at 25°C of 20.0 to 22.5 mN/m, preferably 20.5 to 22.0 mN/m, and yet more preferably 20.8 to 21.8 mN/m.

When the surface tension at 25°C is in this range, an ink composition having excellent discharge stability and giving a cured film having excellent blocking resistance and surface scarring resistance is obtained.

Examples of methods for measuring the surface tension of the ink composition include a method in which it is

measured at a liquid temperature of 25°C by a suspended ring method using a standard surface tensiometer (e.g. a SIGMA 702 surface tensiometer manufactured by KSV INSTRUMENTS LTD, etc.).

(Inkjet recording method, inkjet recording device, and printed material)

The inkjet recording method of the present invention is a method in which an image is formed by discharging onto a recording medium (support, recording material, etc.) the ink composition of the present invention which is for inkjet recording and curing the inks by irradiating the inks discharged onto the recording medium with actinic radiation (active energy line).

More specifically, the inkjet recording method of the present invention comprises ($a^1$) a step of discharging onto a recording medium the ink composition of the present invention, and, ($b^1$) a step of curing the ink composition by irradiating the discharged ink composition with actinic radiation. The inkjet recording method of the present invention comprises the steps ($a^1$) and ($b^1$) above and thus forms an image from the ink composition cured on the support.

The printed material of the present invention is recorded by the inkjet recording method of the present invention.

The inkjet recording device described in detail below can be used in the step ($a^1$) of the inkjet recording method of the present invention.

<Inkjet recoding device>

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in step ($a^1$) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition, a supply pipe, an ink supply tank immediately before an inkjet head, a filter, and a piezo system inkjet head per inks of each color forming the ink set of the present invention. The piezo system inkjet head may be driven so as to discharge a multisize dot of preferably 1 to 100 pL, more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the ink composition of the present invention to be discharged at a constant temperature, the inkjet recording device is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The ink composition of the present invention is preferably discharged using the above mentioned inkjet recording device after being heated to preferably 25°C to 80°C, and more preferably 25°C to 50°C, so as to reduce the viscosity of the ink composition to preferably 3 to 15 mPa·s, and more preferably 3 to 13 mPa·s. In particular, a viscosity of the ink composition at 25°C is preferably not more than 50 mPa·s, more preferably 5 to 40 mPa·s, and yet more preferably 10 to 30 mPa·s. When in the above-mentioned range, a good dischargeability of the ink composition can be obtained. mPa·s is the same meaning as cP (centipoises).

The method for measuring viscosity at 25°C of the ink composition is not particularly limited, but is preferably a measurement method in accordance with JIS Z8803.

Furthermore, as an instrument for measuring viscosity, it is preferable to use a rotational viscometer, and particularly preferably a B or E type rotational viscometer.

As a specific method for measuring viscosity at 25°C of the ink composition, for example, it is preferably measured using a model RE80 viscometer (Toki Sangyo Co., Ltd.) at a liquid temperature of 25°C after stabilizing by rotating for 2 minutes by means of a rotor.

The radiation curing type ink composition such as the ink composition of the present invention generally has a viscosity that is higher than that of a water-based ink composition used for a normal inkjet recording ink composition,

and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

The inkjet head used in the inkjet recording method of the present invention is preferably an inkjet head having a nozzle plate with a face on the ink discharge side treated so as to have affinity for an ink.

As the inkjet head having a nozzle plate with a face on the ink discharge side treated so as to have affinity for an ink, for example, an on-demand inkjet head of a piezo drive system manufactured by FUJIFILM Dimatix, Inc. can be cited. Specific examples thereof include S-class and Q-class Sapphire.

The nozzle plate is a nozzle plate with a face on the ink discharge side treated so as to have affinity for an ink, may be one in which at least part of the face on the ink discharge side has been treated so as to have affinity for an ink, and is preferably one in which the entire face on the ink discharge side has been treated so as to have affinity for an ink.

As a method for ink affinity treatment, there can be cited a method in which at least one non-ink repelling layer is formed on at least part of the surface of a nozzle plate.

Specifically, the nozzle plate preferably comprises, on at least part of the face on the ink discharge side, a layer formed from at least one type selected from the group consisting of gold, stainless steel, iron, titanium, tantalum, platinum, rhodium, nickel, chromium, silicon oxide, silicon nitride, and aluminum nitride, more preferably a layer formed from at least one type selected from the group consisting of gold, stainless steel, iron, titanium, silicon oxide, silicon nitride, and aluminum nitride, yet more preferably a layer formed from at least one type selected from the group consisting of gold, stainless steel, and silicon oxide, and most preferably a layer formed from silicon oxide.

As the method for ink affinity treatment, a known method may be used, and examples thereof include, but are not limited to, (1) a method in which a silicon oxide film is formed by thermally oxidizing the surface of a nozzle plate made of silicon, (2) a method in which an oxide film of silicon or a material other than silicon is oxidatively formed or a method in which it is formed by sputtering, and (3) a method in which a metal film is formed. Details of these methods may be referred to in US Pat. Application Publication No. 2010/0141709. Methods (1) to (3) for ink affinity treatment are explained below, but they should not be construed as being limited thereto.

The step ($b^1$) of curing the ink composition by irradiating the discharged ink composition with actinic radiation is now explained.

The ink composition discharged onto the recording medium cures upon exposure to actinic radiation. This is due to a initiating species such as a radical being generated by decomposition of the photopolymerization initiator contained in the ink used of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include $\alpha$ rays, $\gamma$ rays, an electron beam, X rays, UV rays, visible light, and IR rays. Although it depends on the absorption characteristics of the sensitizer, the peak wavelength of the actinic radiation is preferably, for example, 200 to 600 nm, more preferably 300 to 450 nm, yet more preferably 320 to 420 nm, and particularly preferably 340 to 400.

Furthermore, the photopolymerization initiation system of the ink composition of the present invention has sufficient sensitivity for low output actinic radiation. The actinic radiation is applied therefore so that the illumination intensity on the exposed surface is preferably, for example, 10 to 4,000 $mW/cm^2$, and more preferably 20 to 2,500 $mW/cm^2$.

As an actinic radiation source, a mercury lamp, a gas/solid laser, etc. are mainly used, and for UV photocuring inkjet ink a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity of the LED on a recording medium is preferably 10 to 2,000 mW/cm$^2$, more preferably 20 to 1,000 mW/cm$^2$, and particularly preferably 50 to 800 mJ/cm$^2$.

The ink composition of the present invention is desirably exposed to such actinic radiation for preferably 0.01 to 120 sec., more preferably 0.01 to 90 sec.

Irradiation conditions and a basic method for irradiation with actinic radiation are disclosed in JP-A-60-132767. Specifically, a light source is provided on either side of a head unit that includes a discharge device of the ink composition, and the head unit and the light source are made to scan by a so-called shuttle system. Irradiation with actinic radiation is carried out after a certain time (preferably 0.01 to 0.5 sec., more preferably 0.01 to 0.3 sec., and particularly preferably 0.01 to 0.15 sec.) has elapsed from when the ink composition has landed. By controlling the time from ink landing to irradiation so as to be a minimum in this way, it becomes possible to prevent the ink composition that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such an inkjet recording method as described above, it is possible to maintain a uniform dot diameter for landed ink composition even for various types of recording medium having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way, the ink composition of the present invention may be cured by irradiation with actinic radiation in high sensitivity and form an image on the surface of the recording medium.

In the inkjet recording method of the present invention, the order in which each color ink composition is discharged is not particularly limited, but it is preferable to apply to a recording medium from a colored ink composition having a high lightness. When yellow, cyan, magenta, and black ink compositions are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta inks and cyan, magenta, black, white, and yellow dark inks may preferably be used, and in this case they are applied on top of the recording medium in the order white → light cyan → light magenta → yellow → cyan → magenta → black.

In the present invention, the recording medium is not particularly limited, and the recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, polyvinylchloride (PVC), acrylic resin, etc.), and paper or plastic film laminated or vapor-deposited with the above metal. In the present invention, as the recording medium, a non-absorbing recording medium may suitably be used.

Example

The present invention is explained below more specifically by reference to Examples and Comparative Examples. However, the present invention should not be construed as being limited by these Examples. 'Parts' in the description below means 'parts by mass' unless otherwise specified.

Materials used in the present invention were as follows.

(Component C) Colorant

IRGALITE BLUE GLVO (cyan pigment, BASF Japan)
CINQUASIA MAGENTA RT-355-D (magenta pigment, BASF Japan)
NOVOPERM YELLOW 4G01 (yellow pigment, Clariant)
SPECIAL BLACK 250 (black pigment, BASF Japan)
Tipaque CR60-2 (white pigment, Ishihara Sangyo Kaisha Ltd.)

(Dispersant)

Solsperse 32000 (Noveon dispersant)
Solsperse 41000 (Noveon dispersant)

(Component A) Polymerizable compound

V-CAP (*N*-vinylcaprolactam, ISP)
SR531 (mixture of 95 mass% cyclic trimethylolpropane formal acrylate (CTFA) and 5 mass% trimethylolpropane triacrylate (TMPTA), Sartomer)
SR339 (phenoxyethyl acrylate, Sartomer)
SR506 (isobornyl acrylate, Sartomer)
SR9003 (propoxylated (2) neopentyl glycol diacrylate, Sartomer)

(Polymerization inhibitor)

FIRSTCURE ST-1 (polymerization inhibitor, mixture of tris(N-nitroso-N-phenylhydroxylamine) aluminum salt (10 mass%) and phenoxyethyl acrylate (90 mass%), Chem First)

(Component B) Polymerization initiator

IRGACURE 819 (bisacylphosphine photopolymerization initiator, BASF Japan) LUCIRIN TPO (photopolymerization initiator, 2,4,6-trimethylbenzoyldiphenylphosphine oxide, BASF)
IRGACURE 184 (photopolymerization initiator, 1-hydroxycyclohexyl phenyl ketone, BASF Japan)
SPEEDCURE ITX (photopolymerization initiator, isopropylthioxanthone, LAMBSON)

(Component D) Silicone-based surfactant with HLB of at least 2 but no greater than 7 (example and comparative example)

KF-351A (silicone-based surfactant, Shin-Etsu Chemical Co., Ltd., HLB: 12)
KF-352A (silicone-based surfactant, Shin-Etsu Chemical Co., Ltd., HLB: 7)
KF-353 (silicone-based surfactant, Shin-Etsu Chemical Co., Ltd., HLB: 10)
KF-354L (silicone-based surfactant, Shin-Etsu Chemical Co., Ltd., HLB: 16)
KF-945 (silicone-based surfactant, Shin-Etsu Chemical Co., Ltd., HLB: 4)
KF-6020 (silicone-based surfactant, Shin-Etsu Chemical Co., Ltd., HLB: 4)
X22-6191 (silicone-based surfactant, Shin-Etsu Chemical Co., Ltd., HLB: 2)
KF-6015 (silicone-based surfactant, Shin-Etsu Chemical Co., Ltd., HLB: 5)
X22-2516 (silicone-based surfactant, Shin-Etsu Chemical Co., Ltd., HLB: 1)

(Component E) Methyl methacrylate polymer

Polymethyl methacrylate (Mw: 10,000, Aldrich, catalog No. 81497)
Polymethyl methacrylate (Mw: 20,000, Aldrich, catalog No. 81498)
Polymethyl methacrylate (Mw: 50,000, Aldrich, catalog No. 81501)
Polymethyl methacrylate (Mw: 75,000, Aldrich, catalog No. 81502)
ELVACITE 2013: methyl methacrylate/*n*-butyl methacrylate copolymer (ratio by mass 36/64, Mw: 37,000, Lucite International)

Preparation of cyan mill base A1

300 parts of IRGALITE BLUE GLVO, 620 parts of SR339, and 80 parts of SOLSPERSE 32000 were mixed by stirring, thus giving cyan mill base A1. Preparation of cyan mill base A1 was carried out by dispersing using a Motor Mill M50 disperser (Eiger Machinery, Inc.) with zirconia beads having a diameter of 0.65 mm at a peripheral speed of 9 m/s for 4 hours.

Preparation of magenta mill base B

300 parts of CINQUASIA MAGENTA RT-335-D, 600 parts of SR339, and 100 parts of SOLSPERSE 32000 were mixed by stirring, thus giving magenta mill base B. Preparation of magenta mill base B was carried out by dispersing using a Motor Mill M50 disperser (Eiger Machinery, Inc.) with zirconia beads having a diameter of 0.65 mm at a peripheral speed of 9 m/s for 10 hours.

Preparation of yellow mill base C

300 parts of NOVOPERM YELLOW 4G01, 600 parts of SR339, and 100 parts of SOLSPERSE 32000 were mixed by stirring, thus giving yellow mill base C. Preparation of yellow mill base C was carried out by dispersing using a Motor Mill M50 disperser (Eiger Machinery, Inc.) with zirconia beads having a diameter of 0.65 mm at a peripheral speed of 9 m/s for 10 hours.

Preparation of black mill base D

400 parts of SPECIAL BLACK 250, 520 parts of SR339, and 80 parts of SOLSPERSE 32000 were mixed by stirring, thus giving black mill base D. Preparation of black mill base D was carried out by dispersing using a Motor Mill M50 disperser (Eiger Machinery, Inc.) with zirconia beads having a diameter of 0.65 mm at a peripheral speed of 9 m/s for 7 hours.

Preparation of white mill base E

500 parts of TIPAQUE CR-60-2, 440 parts of SR339, and 60 parts of SOLSPERSE 41000 were mixed by stirring, thus giving white mill base E. Preparation of white mill base E was carried out by dispersing using a Motor Mill M50 disperser (Eiger Machinery, Inc.) with zirconia beads having a diameter of 0.65 mm at a peripheral speed of 9 m/s for 4 hours.

Preparation of cyan mill base A2

300 parts of IRGALITE BLUE GLVO, 620 parts of SR531, and 80 parts of SOLSPERSE 32000 were mixed by stirring, thus giving cyan mill base A2. Preparation of cyan mill base A2 was carried out by dispersing using a Motor Mill M50 disperser (Eiger Machinery, Inc.) with zirconia beads having a diameter of 0.65 mm at a peripheral speed of 9 m/s for 4 hours.

<Preparation of ink composition>

Ink compositions of Examples 1 to 25 and Comparative Examples 1 to 10 were obtained by mixing and stirring the materials described in Tables 1 to 4.

[Method for measuring surface tension]

The surface tension of an ink composition was measured at 25°C using a SIGMA 702 surface tensiometer (suspended ring method, KSV Instruments Ltd).

[Method for measuring viscosity]

The viscosity of an ink composition was measured at a liquid temperature of 25°C using a Model RE80 viscometer (Toki Sangyo Co., Ltd.) after the rotor had been rotated for 2 min. and it had stabilized.

[Method for measuring HLB]

The HLB value was calculated by Griffin's method. In Griffin's method, the HLB value was calculated from the equation below.

$$\text{HLB value} = 20 \times \text{sum total of formula weights of hydrophile portions/molecular weight}$$

<Inkjet recording method>

Inkjet images were printed using an Acuity Advance UV curing type inkjet printer (Fujifilm Corporation) in bidirectional print mode (high productivity mode) and Fineart mode (high resolution mode). Fineart mode is printing carried out in a multipass mode in which the same image area is drawn with 8 passes. The printer was equipped with UV lamp light sources on the left and right of the head unit, and in bidirectional print mode the same image area was exposed to UV 16 times while drawing 8 times with the multiple passes.

100% solid images were printed on Avery Permanent 400 (polyvinyl chloride (PVC), Avery) at a resolution of 600 x 450 dpi with a size of 30 cm x 30 cm. The lamp was equipped with SUB ZERO 085 H bulb lamp units manufactured by Integration Technology.

When the exposure area illumination intensity was measured during printing, it was 690 $mW/cm^2$.

<Evaluation of surface scarring resistance>

An image that was obtained was rubbed with a finger nail 10 times, the image surface was examined, and the degree of scratching (surface scarring resistance) was evaluated using the criteria below.

4: there was no scratching on the surface at all even when examined at a distance of 50 cm from the printed material.
3: slight scratching was visible on the surface when examined at a distance of 50 cm from the printed material but no scratching was visible at a distance of 1 m.
2: scratching was clearly visible when examined at a distance of 50 cm from the printed material but no scratching was visible at a distance of 1 m.
1: scratching was clearly visible even when examined at a distance of 1 m from the printed material.

<Evaluation of blocking resistance>

A total of five sheets of printed material were formed by the inkjet recording method using a coated paper (150 gsm, Oji Paper Co., Ltd.) as the support, the images thus obtained were superimposed and allowed to stand in an oven at 30°C for 24 hours with a weight of 5 kg placed thereon, and the extent to which the images stuck to each other was evaluated.

5: printed materials did not stick to each other at all.
4: printed materials stuck to each other but were easily peeled apart by hand, and there was no transfer of image onto the reverse face of the support on top.
3: printed materials stuck to each other; they were easily peeled apart by hand and there was slight transfer of image onto the reverse face of the support on top.
2: printed materials stuck to each other; they were easily peeled apart by hand and there was considerable transfer of image onto the reverse face of the support on top.
1: printed materials stuck to each other, and they were difficult to peel apart by hand.

<Substrate adhesion>

A printed material was formed by the inkjet recording method using Priplak (film thickness 0.8 mm, polypropylene sheet, Robert Horne) as the support. Adhesion between a cured film and the recording medium was evaluated by a crosshatch test (EN ISO2409) and expressed as 5B to 1 B in accordance with the ASTM method. 5B is the best adhesion, and 3B and above are levels having no practical problems.

<Evaluation of continuous discharge stability (10 pL) >

After the ink composition obtained was stored at room temperature for two weeks, recording on a recording medium was carried out using inkjet recording equipment having a Q-class Sapphire QS-256/10 inkjet head with a nozzle plate treated so as to have affinity for an ink (FUJIFILM Dimatix, Inc., number of nozzles 256, liquid droplet volume 10 pL, 50 kHz, ink affinity treatment: silicon oxide) with the discharged liquid droplets fixed at 10 pL, and the presence or absence of dot dropouts and ink scattering was visually examined when printing was carried out continuously for 60 min. and evaluated using the criteria below. Discharge was carried out by adjusting the head temperature so that the discharge viscosity was 9.0±0.2 cP.

5: no occurrence of dot dropouts or ink scattering.
4: 1 to 3 occurrences of dot dropouts or ink scattering
3: 4 to 10 occurrences of dot dropouts or ink scattering
2: 11 to 20 occurrences of dot dropouts or ink scattering
1: 21 or more occurrences of dot dropouts or ink scattering

<Evaluation of image graininess >

Single color printed materials having image densities of 100%, 80%, 60%, and 40% were formed by the inkjet printing method, and image graininess was evaluated in accordance with the criteria below.

4: there was no feeling of grain for printed materials when examined from a distance of 50 cm.
3: there was slight feeling of grain for printed materials when examined from a distance of 50 cm, but no feeling of grain at a distance of 1 m.
2: there was slight feeling of grain for printed materials when examined from a distance of 1 m.
1: there was clear feeling of grain for printed materials when examined from a distance of 1 m.

The results are shown in the tables below. The mill bases of the respective colors used are described in terms of the respective components (colorant, dispersant, monomer, etc.). Furthermore, '-' in the table denotes none being contained. The content of each component is expressed as parts by mass.

Table 1

| | | | Example | | | | |
|---|---|---|---|---|---|---|---|
| | | | 1 | 2 | 3 | 4 | 5 |
| | | Color | Cyan | Magenta | Yellow | Black | White |
| | | Mill base | A1 | B | C | D | E |
| | | Mill base (parts by mass) | 8.2 | 16.0 | 8.0 | 9.0 | 30.0 |
| Component C | Colorant | IRGALITE BLUE GLVO | 2.46 | - | - | - | - |
| | | CINQUASIA MAGENTA RT335D | - | 4.8 | - | - | - |
| | | NOVOPERM YELLOW 4G01 | - | - | 2.4 | - | - |
| | | SPECIAL BLACK 250 | - | - | - | 3.6 | - |
| | | Tipaque CR60-2 | - | - | - | - | 15.0 |
| Dispersant | | Solsperse 32000 | 0.82 | 1.6 | 0.8 | 0.9 | - |
| | | Solsperse 41000 | - | - | - | - | 1.8 |

(continued)

| | | | Example | | | | |
|---|---|---|---|---|---|---|---|
| | | | 1 | 2 | 3 | 4 | 5 |
| | | Color | Cyan | Magenta | Yellow | Black | White |
| | | Mill base | A1 | B | C | D | E |
| | | Mill base (parts by mass) | 8.2 | 16.0 | 8.0 | 9.0 | 30.0 |
| Component A | Component A-1 | V-CAP | 18.0 | 18.0 | 18.0 | 18.0 | 18.0 |
| | Component A-2 | SR531 | 23.2 | 23.2 | 23.2 | 23.2 | 23.2 |
| | Component A-3 | SR339 | 34.72 | 31.2 | 34.4 | 33.1 | 24.0 |
| | Other | SR9003 | 2.0 | 2.0 | 2.0 | 2.0 | 2.0 |
| Polynerization inhibitor | | FIRSTCURE ST-1 | 0.5 | 0.5 | 0.5 | 0.5 | 0.5 |
| Component B | Component B-1-1 | IRGACURE 819 | 4.0 | 4.0 | 4.0 | 4.0 | 4.0 |
| | Component B-1-2 | LUCIRIN TPO | 4.8 | 4.8 | 4.8 | 4.8 | 4.8 |
| | Component B-2 | SPEEDCURE ITX | 3.2 | 3.2 | 3.2 | 3.2 | 1.0 |
| | Component B-3 | IRGACURE 184 | 3.8 | 4.2 | 4.2 | 4.2 | 3.2 |
| Component D | Silicone-based surfactant with HLB of at least 2 but no greater than 7 | KF-945 (HLB: 4.0) | 0.7 | 0.7 | 0.7 | 0.7 | 0.7 |
| Component E | Methyl methacrylate polymer | ELVACITE 2013 | 1.8 | 1.8 | 1.8 | 1.8 | 1.8 |
| | | Ink surface tension [mN/m] | 20.9 | 20.9 | 20.9 | 20.9 | 20.8 |
| Performance evaluation results | | Surface scarring resistance | 4 | 4 | 4 | 4 | 4 |
| | | Blocking resistance | 5 | 5 | 5 | 5 | 5 |
| | | Substrate adhesion to PP | 5B | 5B | 5B | 5B | 5B |
| | | Continuous discharge stability | 5 | 5 | 5 | 5 | 5 |
| | | Image graininess 100% image | 4 | 4 | 4 | 4 | 4 |
| | | Image graininess 80% image | 4 | 4 | 4 | 4 | 4 |
| | | Image graininess 60% image | 4 | 4 | 4 | 4 | 4 |
| | | Image graininess 40% image | 4 | 4 | 4 | 4 | 4 |

Table 2

| | | | Example | | | | | | | | | | | | | | |
|---|---|---|---|---|---|---|---|---|---|---|---|---|---|---|---|---|---|
| | | | 6 | 7 | 8 | 9 | 10 | 11 | 12 | 13 | 14 | 15 | 16 | 17 | 18 | 19 | 20 |
| | | Color Mill base | Cyan | Cyan | Cyan | Cyan | Cyan | Cyan | Cyan | Cyan | Cyan | Cyan | Cyan | Cyan | Cyan | Cyan | Cyan |
| | | | A1 | A1 | A1 | A1 | A1 | A1 | A1 | A1 | A1 | A1 | A1 | A1 | A1 | A1 | A1 |
| | | Mill base (parts by mass) | 8.2 | 8.2 | 8.2 | 8.2 | 8.2 | 8.2 | 8.2 | 8.2 | 8.2 | 8.2 | 8.2 | 8.2 | 8.2 | 8.2 | 8.2 |
| Component C | Colorant | IRGALITE BLUE GLVO | 2.46 | 2.46 | 2.46 | 2.46 | 2.46 | 2.46 | 2.46 | 2.46 | 2.46 | 2.46 | 2.46 | 2.46 | 2.46 | 2.46 | 2.46 |
| Dispersant | | Solsperse 32000 | 0.82 | 0.82 | 0.82 | 0.82 | 0.82 | 0.82 | 0.82 | 0.82 | 0.82 | 0.82 | 0.82 | 0.82 | 0.82 | 0.82 | 0.82 |
| Component A | Component A-1 | V-CAP | 18.0 | 18.0 | 18.0 | 18.0 | 18.0 | 18.0 | 18.0 | 18.0 | 18.0 | 18.0 | 13.0 | 18.0 | 13.0 | 18.0 | 18.0 |
| | Component A-2 | SR531 | 23.2 | 23.2 | 23.2 | 23.2 | 23.2 | 23.2 | 23.2 | 23.2 | 23.2 | 23.2 | 59.9 | - | - | 25.0 | 23.2 |
| | Component A-3 | SR339 | 35.02 | 34.87 | 34.42 | 33.42 | 34.42 | 33.42 | 31.42 | 34.42 | 34.42 | 34.42 | 5.0 | 57.92 | 5.0 | 34.72 | 30.72 |
| | Other | SR9003 | 2.0 | 2.0 | 2.0 | 2.0 | 2.0 | 2.0 | 2.0 | 2.0 | 2.0 | 2.0 | - | 2.0 | 2.0 | 2.0 | 6.0 |
| | | SR506 | - | - | - | - | - | - | - | - | - | - | - | - | 57.92 | - | - |
| Polymerization inhibitor | | FIRSTCURE ST-1 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Component B | Component B-1-1 | IRGACURE 819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | Component B-1-2 | LUCIRIN TPO | 4.8 | 4.8 | 4.8 | 4.8 | 4.8 | 4.8 | 4.8 | 4.8 | 4.8 | 4.8 | 4.8 | 4.8 | 4.8 | 4.8 | 4.8 |
| | Component B-2 | SPEEDCURE ITX | 3.2 | 3.2 | 3.2 | 3.2 | 3.2 | 3.2 | 3.2 | 3.2 | 3.2 | 3.2 | 3.2 | 3.2 | 3.2 | 3.2 | 3.2 |
| | Component B-3 | IRGACURE 184 | 3.8 | 3.8 | 3.8 | 3.8 | 3.8 | 3.8 | 3.8 | 3.8 | 3.8 | 3.8 | 3.8 | 3.8 | 3.8 | 3.8 | 3.8 |

(continued)

| | | | Example | | | | | | | | | | | | | | |
|---|---|---|---|---|---|---|---|---|---|---|---|---|---|---|---|---|---|
| | | | 6 | 7 | 8 | 9 | 10 | 11 | 12 | 13 | 14 | 15 | 16 | 17 | 18 | 19 | 20 |
| | | Color Mill base | Cyan | Cyan | Cyan | Cyan | Cyan | Cyan | Cyan | Cyan | Cyan | Cyan | Cyan | Cyan | Cyan | Cyan | Cyan |
| | | | A1 | A1 | A1 | A1 | A1 | A1 | A1 | A1 | A1 | A1 | A1 | A1 | A1 | A1 | A1 |
| | | Mill base (parts by mass) | 8.2 | 8.2 | 8.2 | 8.2 | 8.2 | 8.2 | 8.2 | 8.2 | 8.2 | 8.2 | 8.2 | 8.2 | 8.2 | 8.2 | 8.2 |
| Component D | Silicone-based surfactant with HLB of at least 2 but no greater than 7 | KF-945 (HLB: 4.0) | 0.4 | 0.55 | 1.0 | 2.0 | - | - | - | - | - | - | 0.7 | 0.7 | 0.7 | 0.7 | 0.7 |
| | | KF-352A (HLB: 7.0) | - | - | - | - | 1.0 | 2.0 | 4.0 | - | - | - | - | - | - | - | - |
| | | KF-6020 (HLB: 4.0) | - | - | - | - | - | - | - | 1.0 | - | - | - | - | - | - | - |
| | | X22-6191 (HLB: 2.0) | - | - | - | - | - | - | - | - | 1.0 | - | - | - | - | - | - |
| | | KF-6015 (HLB: 5.0) | - | - | - | - | - | - | - | - | - | 1.0 | - | - | - | - | - |
| Component E | Methyl methacrylate polymer | ELVACITE 2013 | 1.8 | 1.8 | 1.8 | 1.8 | 1.8 | 1.8 | 1.8 | 1.8 | 1.8 | 1.8 | 1.8 | 1.8 | 1.8 | - | 1.8 |
| | | Ink surface tension [mN/m] | 21.4 | 20.9 | 20.8 | 20.6 | 22.4 | 22.1 | 22.0 | 20.8 | 20.1 | 21.2 | 20.9 | 20.9 | 20.8 | 20.9 | 20.9 |

(continued)

| | | Example | | | | | | | | | | | | | | |
|---|---|---|---|---|---|---|---|---|---|---|---|---|---|---|---|---|
| | | 6 | 7 | 8 | 9 | 10 | 11 | 12 | 13 | 14 | 15 | 16 | 17 | 18 | 19 | 20 |
| | Color Mill base | Cyan | Cyan | Cyan | Cyan | Cyan | Cyan | Cyan | Cyan | Cyan | Cyan | Cyan | Cyan | Cyan | Cyan | Cyan |
| | | A1 | A1 | A1 | A1 | A1 | A1 | A1 | A1 | A1 | A1 | A1 | A1 | A1 | A1 | A1 |
| | Mill base (parts by mass) | 8.2 | 8.2 | 8.2 | 8.2 | 8.2 | 8.2 | 8.2 | 8.2 | 8.2 | 8.2 | 8.2 | 8.2 | 8.2 | 8.2 | 8.2 |
| Performance evaluation results | Surface scarring resistance | 3 | 4 | 4 | 4 | 3 | 3 | 4 | 4 | 4 | 4 | 4 | 4 | 3 | 3 | 4 |
| | Blocking resistance | 5 | 5 | 5 | 5 | 5 | 5 | 5 | 5 | 5 | 5 | 5 | 5 | 4 | 4 | 5 |
| | Substrate adhesion to PP | 5B | 5B | 5B | 5B | 5B | 5B | 5B | 5B | 5B | 5B | 3B | 5B | 3B | 3B | 3B |
| | Continuous discharge stability | 5 | 5 | 5 | 4 | 5 | 4 | 3 | 5 | 4 | 5 | 5 | 5 | 4 | 5 | 5 |
| | Image graininess 100% image | 4 | 4 | 4 | 4 | 4 | 4 | 4 | 4 | 4 | 4 | 4 | 4 | 4 | 4 | 4 |
| | Image graininess 80% image | 4 | 4 | 4 | 4 | 4 | 4 | 4 | 4 | 4 | 4 | 4 | 3 | 4 | 4 | 4 |
| | Image graininess 60% image | 3 | 4 | 4 | 4 | 4 | 4 | 4 | 4 | 4 | 4 | 4 | 3 | 3 | 4 | 4 |
| | Image graininess 40% image | 3 | 4 | 4 | 4 | 3 | 4 | 4 | 4 | 4 | 4 | 4 | 3 | 3 | 4 | 4 |

Table 3

| | | | Example | | | | |
|---|---|---|---|---|---|---|---|
| | | | 21 | 22 | 23 | 24 | 25 |
| | | Color | Cyan | Cyan | Cyan | Cyan | Cyan |
| | | Mill base | A2 | A1 | A1 | A1 | A1 |
| | | Mill base (parts by mass) | 8.2 | 8.2 | 8.2 | 8.2 | 8.2 |
| Component C | Colorant | IRGALITE BLUE GLVO | 2.46 | 2.46 | 2.46 | 2.46 | 2.46 |
| Dispersant | | Solsperse 32000 | 0.82 | 0.82 | 0.82 | 0.82 | 0.82 |
| Component A | Component A-1 | V-CAP | 18.0 | 18.0 | 18.0 | 18.0 | 18.0 |
| | Component A-2 | SR531 | 57.92 | 23.20 | 23.20 | 23.20 | 23.20 |
| | Component A-3 | SR339 | - | 34.72 | 34.72 | 34.72 | 34.72 |
| | Other | SR9003 | 2.0 | 2.0 | 2.0 | 2.0 | 2.0 |
| Polymerization inhibitor | | FISTCURE ST-1 | 0.5 | 0.5 | 0.5 | 0.5 | 0.5 |
| Component B | Component B-1-1 | IRGACURE 819 | 4.0 | 4.0 | 4.0 | 4.0 | 4.0 |
| | Component B-1-2 | LUCIRIN TPO | 4.8 | 4.8 | 4.8 | 4.8 | 4.8 |
| | Component B-2 | SPEEDCUREITX | 3.2 | 3.2 | 3.2 | 3.2 | 3.2 |
| | Component B-3 | IRGACURE 184 | 3.8 | 3.8 | 3.8 | 3.8 | 3.8 |
| Component D | Silicone-based surfactant with HLB of at least 2 but no greater than 7 | KF-945 (HLB: 40) | 0.7 | 0.7 | 0.7 | 0.7 | 0.7 |
| Component E | Methyl methacrylate polymer | ELVACITE 2013 | 1.8 | - | - | - | - |
| | | Polymethyl methacrylate (Mw: 10,000) | - | 1.8 | - | - | - |
| | | Polymethyl methacrylate (Mw: 20,000) | - | - | 1.8 | - | - |
| | | Polymethyl methacrylate (Mw: 50,000) | - | - | - | 1.8 | - |
| | | Polymethyl methacrylate (Mw: 75,000) | - | - | - | - | 1.8 |
| Ink surface tension [mN/m] | | | 20.9 | 20.9 | 20.9 | 20.9 | 20.9 |

(continued)

| | | Example | | | | |
|---|---|---|---|---|---|---|
| | | 21 | 22 | 23 | 24 | 25 |
| | Color | Cyan | Cyan | Cyan | Cyan | Cyan |
| | Mill base | A2 | A1 | A1 | A1 | A1 |
| | Mill base (parts by mass) | 8.2 | 8.2 | 8.2 | 8.2 | 8.2 |
| Performance evaluation results | Surface scarring resistance | 4 | 4 | 4 | 4 | 4 |
| | Blocking resistance | 4 | 4 | 5 | 5 | 5 |
| | Substrate adhesion to PP | 4B | 5B | 5B | 5B | 5B |
| | Continuous discharge stability | 5 | 5 | 5 | 5 | 3 |
| | Image graininess 100% image | 4 | 4 | 4 | 4 | 4 |
| | Image graininess 80% image | 4 | 4 | 4 | 4 | 4 |
| | Image graininess 60% image | 4 | 4 | 4 | 4 | 4 |
| | Image graininess 40% image | 3 | 4 | 4 | 4 | 4 |

Table 4

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| | | Color | Cyan | Cyan | Cyan | Cyan | Cyan | Cyan | Cyan | Cyan | Cyan | Cyan |
| | | Mill base | A1 | A1 | A1 | A1 | A1 | A1 | A1 | A1 | A1 | A1 |
| | | Mill base (parts by mass) | 8.2 | 8.2 | 8.2 | 8.2 | 8.2 | 8.2 | 8.2 | 8.2 | 8.2 | 8.2 |
| Component C | Colorant | IRGALITE BLUE GLVO | 2.46 | 2.46 | 2.46 | 2.46 | 2.46 | 2.46 | 2.46 | 2.46 | 2.46 | 2.46 |
| Dispersant | | Solsperse 32000 | 0.82 | 0.82 | 0.82 | 0.82 | 0.82 | 0.82 | 0.82 | 0.82 | 0.82 | 0.82 |
| Component A | Component A-1 | V-CAP | 18.0 | 18.0 | 18.0 | 18.0 | 18.0 | 18.0 | 18.0 | - | 18.0 | 18.0 |
| | Component A-2 | SR531 | 23.2 | 23.2 | 23.2 | 23.2 | 23.2 | 23.2 | 23.2 | 23.2 | 23.2 | 23.2 |
| | Component A-3 | SR339 | 35.42 | 35.22 | 34.72 | 34.72 | 34.72 | 34.72 | 33.42 | 52.72 | 28.72 | 12.72 |
| | Other | SR9003 | 2.0 | 2.0 | 2.0 | 2.0 | 2.0 | 2.0 | 2.0 | 2.0 | 8.0 | 24.0 |
| Polymerization inhibitor | | FIRSTCURE ST-1 | 0.5 | 0.5 | 0.5 | 0.5 | 0.5 | 0.5 | 0.5 | 0.5 | 0.5 | 0.5 |
| Component B | Component B-1-1 | IRGACURE 819 | 4.0 | 4.0 | 4.0 | 4.0 | 4.0 | 4.0 | 4.0 | 4.0 | 4.0 | 4.0 |
| | Component B-1-2 | LUCIRIN TPO | 4.8 | 4.8 | 4.8 | 4.8 | 4.8 | 4.8 | 4.8 | 4.8 | 4.8 | 4.8 |
| | Component B-2 | SPEEDCURE ITX | 3.2 | 3.2 | 3.2 | 3.2 | 3.2 | 3.2 | 3.2 | 3.2 | 3.2 | 3.2 |
| | Component B-3 | IRGACURE 184 | 3.8 | 3.8 | 3.8 | 3.8 | 3.8 | 3.8 | 3.8 | 3.8 | 3.8 | 3.8 |
| Component D | Silicone-based surfactant with HLB of at least 2 but no greater than 7 | KF-945 (HLB: 4.0) | - | 0.2 | - | - | - | - | - | 0.7 | 0.7 | 0.7 |
| | | KF-352A (HLB: 7.0) | - | - | - | - | - | - | - | - | - | - |

(continued)

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| | | Color | Cyan | Cyan | Cyan | Cyan | Cyan | Cyan | Cyan | Cyan | Cyan | Cyan |
| | | Mill base | A1 | A1 | A1 | A1 | A1 | A1 | A1 | A1 | A1 | A1 |
| | | Mill base (parts by mass) | 8.2 | 8.2 | 8.2 | 8.2 | 8.2 | 8.2 | 8.2 | 8.2 | 8.2 | 8.2 |
| Other surfactant | | KF-353 (HLB: 10) | - | - | 0.7 | - | - | - | 2.0 | - | - | - |
| | | KF-351A (HLB: 12) | | - | - | 0.7 | - | - | - | - | - | - |
| | | KF-354L (HLB: 16) | - | - | - | - | 0.7 | - | - | - | - | - |
| | | X22-2516 (HLB: 1) | - | - | - | - | - | 0.7 | - | - | - | - |
| Component E | Methyl methacrylate polymer | ELVACITE 2013 | 1.8 | 1.8 | 1.8 | 1.8 | 1.8 | 1.8 | 1.8 | 1.8 | 1.8 | 1.8 |
| Performance evaluation results | | Ink surface tension [mN/m] | 38.1 | 22.6 | 25.5 | 28.2 | 31.6 | 20.0 | 24.9 | 22.0 | 20.9 | 20.9 |
| | | Surface scarring resistance | 1 | 2 | 2 | 1 | 1 | 4 | 2 | 3 | 3 | 2 |
| | | Blocking resistance | 2 | 4 | 3 | 2 | 2 | 4 | 3 | 4 | 4 | 4 |
| | | Substrate adhesion to PP | 4B | 5B | 4B | 4B | 4B | 3B | 4B | 1B | 2B | 1B |
| | | Continuous discharge stability | 5 | 5 | 5 | 5 | 5 | 1 | 5 | 5 | 4 | 4 |

(continued)

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| | Color | Cyan | Cyan | Cyan | Cyan | Cyan | Cyan | Cyan | Cyan | Cyan | Cyan |
| | Mill base | A1 | A1 | A1 | A1 | A1 | A1 | A1 | A1 | A1 | A1 |
| | Mill base (parts by mass) | 8.2 | 8.2 | 8.2 | 8.2 | 8.2 | 8.2 | 8.2 | 8.2 | 8.2 | 8.2 |
| | Image graininess 100% image | 4 | 4 | 4 | 4 | 4 | 4 | 4 | 4 | 4 | 4 |
| | Image graininess 80% image | 3 | 4 | 3 | 3 | 3 | 4 | 3 | 3 | 4 | 4 |
| | Image graininess 60% image | 3 | 4 | 3 | 3 | 3 | 4 | 3 | 3 | 4 | 4 |
| | Image graininess 40% image | 2 | 4 | 2 | 2 | 2 | 4 | 3 | 2 | 4 | 4 |

## Claims

1. An ink composition for inkjet recording comprising:

    (Component A) a radically polymerizable compound;
    (Component B) a polymerization initiator;
    (Component C) a colorant; and
    (Component D) a silicone-based surfactant with an HLB of at least 2 but no greater than 7,
    Component A comprising (Component A-1) an *N*-vinyllactam,
    Component D having a content of at least 0.4 mass% but no greater than 4.0 mass% of the entire ink composition,
    the total amount of monofunctional monomer being at least 75 mass% of the entire ink composition,
    the composition comprising no polyfunctional monomer or having a total amount of polyfunctional monomer of no greater than 10 mass% of the entire ink composition, and
    the composition having a surface tension at 25°C of at least 20.0 mN/m but no greater than 22.5 mN/m.

2. The ink composition for inkjet recording according to Claim 1, wherein it further comprises (Component E) an inactive methyl methacrylate homopolymer and/or copolymer having a weight-average molecular weight of 4,000 to 120,000.

3. The ink composition for inkjet recording according to Claim 2, wherein Component E has a content of at least 0.3 mass% but no greater than 2.0 mass% of the entire ink composition.

4. The ink composition for inkjet recording according to Claim 2 or 3, wherein the weight-average molecular weight of Component E is 10,000 to 75,000.

5. The ink composition for inkjet recording according to any one of Claims 2 to 4, wherein Component E is a methyl methacrylate homopolymer and/or a copolymer in which the proportion of methyl methacrylate-derived repeating unit is 30.0 to 85.0 mass%.

6. The ink composition for inkjet recording according to any one of Claims 2 to 5, wherein Component E is a methyl methacrylate homopolymer and/or a methyl methacrylate-*n*-butyl methacrylate copolymer.

7. The ink composition for inkjet recording according to any one of Claims 2 to 6, wherein the ratio by mass of Component E and Component D in the ink composition is 1:8 to 8:1.

8. The ink composition for inkjet recording according to any one of Claims 1 to 7, wherein it comprises as Component D a silicone-based surfactant with an HLB of at least 2 but no greater than 5.

9. The ink composition for inkjet recording according to any one of Claims 1 to 8, wherein it further comprises as Component A (Component A-2) a compound represented by Formula (1) below,

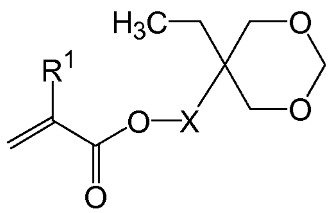

(1)

wherein in Formula (1) $R^1$ denotes a hydrogen atom or a methyl group and X denotes a single bond or a divalent linking group.

10. The ink composition for inkjet recording according to any one of Claims 1 to 9, wherein it further comprises as Component A (Component A-3) a compound represented by Formula (2) below,

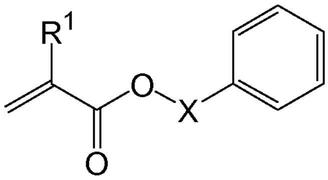

( 2 )

wherein in Formula (2) $R^1$ denotes a hydrogen atom or a methyl group and X denotes a single bond or a divalent linking group.

**11.** The ink composition for inkjet recording according to any one of Claims 1 to 10, wherein Component A-1 is *N*-vinylcaprolactam.

**12.** The ink composition for inkjet recording according to any one of Claims 1 to 11, wherein the content of the polyfunctional monomer is 0.5 to 8 mass% of the entire ink composition.

**13.** An inkjet recording method comprising:

($a^1$) a step of discharging onto a recording medium the ink composition for inkjet recording according to any one of Claims 1 to 12; and
($b^1$) a step of curing the ink composition for inkjet recording by irradiating the discharged ink composition for inkjet recording with actinic radiation.

**14.** A printed material obtained by the inkjet recording method according to Claim 13.

**15.** Use of the composition according to any one of Claims 1 to 12 as an ink for inkjet recording.

**Patentansprüche**

**1.** Tintenzusammensetzung zur Tintenstrahlaufzeichnung aufweisend:

(Komponente A) eine radikalisch polymerisierbare Verbindung;
(Komponente B) einen Polymerisationsinitiator;
(Komponente C) einen Farbstoff; und
(Komponente D) ein grenzflächenaktives Mittel auf Silikonbasis mit einem HLB von mindestens 2, aber nicht größer als 7,
wobei Komponente A aufweist (Komponente A-1) ein N-Vinyllactam,
der Gehalt der Komponente D an der gesamten Tintenzusammensetzung mindestens 0,4 Masse-%, aber nicht mehr als 4,0 Masse-% beträgt,
die Gesamtmenge an monofunktionellem Monomer mindestens 75 Masse-% der gesamten Tintenzusammensetzung beträgt,
die Zusammensetzung kein polyfunktionelles Monomer aufweist oder eine Gesamtmenge an polyfunktionellem Monomer von nicht mehr als 10 Masse-% der gesamten Tintenzusammensetzung hat, und
die Zusammensetzung eine Oberflächenspannung bei 25°C von mindestens 20,0 mN/m, aber nicht größer als 22,5 mN/m hat.

**2.** Tintenzusammensetzung zur Tintenstrahlaufzeichnung nach Anspruch 1, die außerdem aufweist (Komponente E) ein inaktives Methyl-methacrylat-Homopolymer und/oder Copolymer mit einer massegemittelten Molekülmasse von 4000 bis 120.000.

**3.** Tintenzusammensetzung zur Tintenstrahlaufzeichnung nach Anspruch 2, wobei der Gehalt der Komponente E an der gesamten Tintenzusammensetzung mindestens 0,3 Masse-%, aber nicht mehr als 2,0 Masse-% beträgt.

**4.** Tintenzusammensetzung zur Tintenstrahlaufzeichnung nach Anspruch 2 oder 3, wobei die massegemittelte Molekülmasse der Komponente E 10.000 bis 75.000 beträgt.

5. Tintenzusammensetzung zur Tintenstrahlaufzeichnung nach einem der Ansprüche 2 bis 4, wobei Komponente E ein Methyl-methacrylat-Homopolymer und/oder ein Copolymer ist, bei dem der Anteil der Methyl-methacrylat-Struktureinheit 30,0 bis 85,0 Masse-% beträgt.

6. Tintenzusammensetzung zur Tintenstrahlaufzeichnung nach einem der Ansprüche 2 bis 5, wobei Komponente E ein Methyl-methacrylat-Homopolymer und/oder ein Methyl-methacrylat-n-Butyl-methacrylat-Copolymer ist.

7. Tintenzusammensetzung zur Tintenstrahlaufzeichnung nach einem der Ansprüche 2 bis 6, wobei das Massenverhältnis von Komponente E und Komponente D in der Tintenzusammensetzung 1:8 bis 8:1 beträgt.

8. Tintenzusammensetzung zur Tintenstrahlaufzeichnung nach einem der Ansprüche 1 bis 7, wobei sie als Komponente D ein grenzflächenaktives Mittel auf Silikonbasis mit einem HLB von mindestens 2, aber nicht größer als 5 aufweist.

9. Tintenzusammensetzung zur Tintenstrahlaufzeichnung nach einem der Ansprüche 1 bis 8, wobei sie außerdem als Komponente A (Komponente A-2) eine Verbindung aufweist, die repräsentiert wird durch Formel (1) unten,

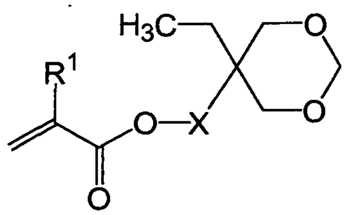

(1)

wobei in Formel (1) $R^1$ ein Wasserstoffatom oder eine Methylgruppe bezeichnet und X eine Einfachbindung oder eine zweiwertige Verbindungsgruppe bezeichnet.

10. Tintenzusammensetzung zur Tintenstrahlaufzeichnung nach einem der Ansprüche 1 bis 9, wobei sie außerdem als Komponente A (Komponente A-3) eine Verbindung aufweist, die repräsentiert wird durch Formel (2) unten,

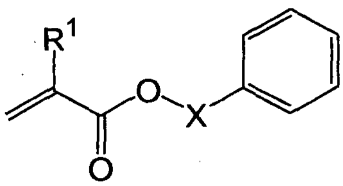

(2)

wobei in Formel (2) $R^1$ ein Wasserstoffatom oder eine Methylgruppe bezeichnet und X eine Einfachbindung oder eine zweiwertige Verbindungsgruppe bezeichnet.

11. Tintenzusammensetzung zur Tintenstrahlaufzeichnung nach einem der Ansprüche 1 bis 10, wobei Komponente A-1 N-Vinylcaprolactam ist.

12. Tintenzusammensetzung zur Tintenstrahlaufzeichnung nach einem der Ansprüche 1 bis 11, wobei der Gehalt des polyfunktionellen Monomers an der gesamten Tintenzusammensetzung 0,5 bis 8 Masse-% beträgt.

13. Tintenstrahl-Aufzeichnungsverfahren aufweisend:

($a^1$) einen Schritt des Ausstoßens der Tintenzusammensetzung zur Tintenstrahlaufzeichnung nach einem der Ansprüche 1 bis 12 auf ein Aufzeichnungsmedium; und
($b^1$) einen Schritt des Härtens der Tintenzusammensetzung zur Tintenstrahlaufzeichnung durch Bestrahlen der ausgestoßenen Tintenzusammensetzung zur Tintenstrahlaufzeichnung mit aktinischer Strahlung.

14. Bedrucktes Material, das mittels des Tintenstrahl-Aufzeichnungsverfahrens nach Anspruch 13 erhalten wurde.

15. Verwendung der Zusammensetzung nach einem der Ansprüche 1 bis 12 als eine Tinte zur Tintenstrahlaufzeichnung.

## Revendications

1. Composition d'encre pour enregistrement à jet d'encre, comprenant :

   (Composant A) un composé polymérisable par radicaux ;
   (Composant B) un initiateur de polymérisation
   (Composant C) un agent colorant, et
   (Composant D) un tensio-actif à base de silicone présentant une valeur HLB au moins égale à 2 mais non supérieure à 7,
   le composant A comprenant (composant A-1) du *N*-vinyllactame ;
   le composant D présentant une teneur égale à au moins 0,4 % en masse mais non supérieure à 4,0 % en masse de la composition d'encre tout entière ;
   la quantité totale de monomère monofonctionnel étant au moins égale à 75 % en masse de la composition d'encre tout entière ;
   la composition ne comprenant aucun monomère polyfonctionnel ou présentant une quantité totale de monomère polyfonctionnel non supérieure à 10 % en masse de la composition d'encre tout entière, et
   la composition présentant une tension de surface à 25 °C égale à au moins 20,0 mN/m mais non supérieure à 22,5 mN/m.

2. Composition d'encre pour enregistrement à jet d'encre selon la revendication 1, dans laquelle celle-ci comprend en outre (composant E) un homopolymère de méthacrylate de méthyle inactif et/ou un copolymère présentant un poids moléculaire moyen en poids de 4000 à 120 000.

3. Composition d'encre pour enregistrement à jet d'encre selon la revendication 2, dans laquelle le composant E présente une teneur égale à au moins 0,3 % en masse mais non supérieure à 2,0 % en masse de la composition d'encre tout entière.

4. Composition d'encre pour enregistrement à jet d'encre selon la revendication 2 ou 3, dans laquelle le poids moléculaire moyen en poids du composant E s'étend de 10 000 à 75 000.

5. Composition d'encre pour enregistrement à jet d'encre selon l'une quelconque des revendications 2 à 4, dans laquelle le composant E est un homopolymère de méthacrylate de méthyle et/ou un copolymère où la proportion de motif répété dérivé du méthacrylate de méthyle s'étend de 30,0 à 85,0 % en masse.

6. Composition d'encre pour enregistrement à jet d'encre selon l'une quelconque des revendications 2 à 5, dans laquelle le composant E est un homopolymère de méthacrylate de méthyle et/ou un copolymère méthacrylate de méthyle-méthacrylate de n-butyle.

7. Composition d'encre pour enregistrement à jet d'encre selon l'une quelconque des revendications 2 à 6, dans laquelle le rapport en masse entre le composant E et le composant D dans la composition d'encre est de 1 : 8 à 8 : 1.

8. Composition d'encre pour enregistrement à jet d'encre selon l'une quelconque des revendications 1 à 7, dans laquelle celle-ci comprend, comme composant D, un tensio-actif à base de silicone présentant une valeur HLB au moins égale à 2 mais non supérieure à 5.

9. Composition d'encre pour enregistrement à jet d'encre selon l'une quelconque des revendications 1 à 8, dans laquelle celle-ci comprend en outre comme composant A (composant A-2) un composé représenté par la formule (1) ci-dessous :

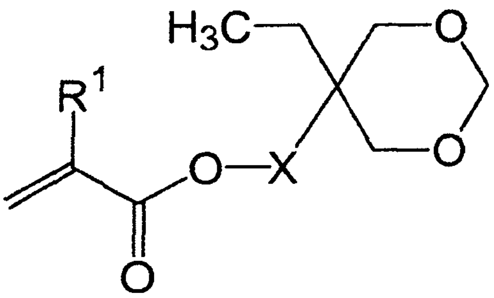

( 1 )

où dans la formule (1), $R^1$ indique un atome d'hydrogène ou un groupe méthyle, et X indique une liaison simple ou un groupe de liaison divalent.

**10.** Composition d'encre pour enregistrement à jet d'encre selon l'une quelconque des revendications 1 à 9, dans laquelle celle-ci comprend en outre comme composant A (composant A-3) un composé représenté par la formule (2) ci-dessous :

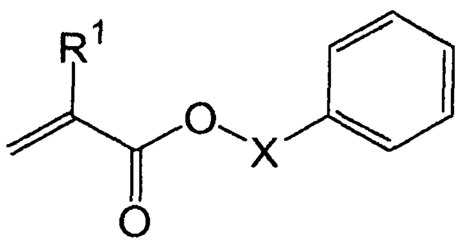

( 2 )

où dans la formule (1), $R^1$ indique un atome d'hydrogène ou un groupe méthyle, et X indique une liaison simple ou un groupe de liaison divalent.

**11.** Composition d'encre pour enregistrement à jet d'encre selon l'une quelconque des revendications 1 à 10, dans laquelle le composant A-1 est du N-vinylcaprolactame.

**12.** Composition d'encre pour enregistrement à jet d'encre selon l'une quelconque des revendications 1 à 11, dans laquelle la teneur du monomère polyfonctionnel s'étend de 0,5 % à 8 % en masse de la composition d'encre tout entière.

**13.** Procédé d'enregistrement àjet d'encre, comprenant :

(a[1]) une étape pour décharger, sur un support d'enregistrement, la composition d'encre pour enregistrement à jet d'encre selon l'une quelconque des revendications 1 à 12, et
(b[1]) une étape pour durcir la composition d'encre pour enregistrement àjet d'encre par irradiation de la composition d'encre déchargée pour enregistrement àjet d'encre avec un rayonnement actinique.

**14.** Matériau imprimé obtenu par le procédé d'enregistrement àjet d'encre selon la revendication 13.

**15.** Utilisation de la composition selon l'une quelconque des revendications 1 à 12 comme encre pour enregistrement àjet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003147233 A
- JP 2009 A
- JP 263603 A
- JP 2009221414 A
- JP 2009209289 A
- JP 2009191183 A
- JP 2008208190 A
- JP 2009096985 A
- JP 2009185186 A
- JP 62173463 A
- JP 62183457 A
- JP 57009053 B
- JP 62135826 A
- JP 2009221416 A
- US 20100141709 A
- US 6084250 A
- JP 60132767 A
- WO 9954415 A


### Non-patent literature cited in the description


- **KAIMENKASSEIZAI BINRAN.** Surfactant Handbook. 05 July 1960